(19) Europäisches Patentamt
European Patent Office
Office européen des brevets

(11) Numéro de publication: **0 159 947**
**B1**

# (12) FASCICULE DE BREVET EUROPEEN

(45) Date de publication du fascicule du brevet: **07.01.88**

(51) Int. Cl.⁴: **F 16 H 21/00**, E 05 F 11/44, B 66 F 7/06, B 25 J 11/00

(21) Numéro de dépôt: **85400732.5**

(22) Date de dépôt: **12.04.85**

## (54) Mécanisme de guidage.

(30) Priorité: **13.04.84 FR 8405901**

(43) Date de publication de la demande: **30.10.85 Bulletin 85/44**

(45) Mention de la délivrance du brevet: **07.01.88 Bulletin 88/1**

(84) Etats contractants désignés: **BE CH DE GB IT LI**

(73) Titulaire: **Darmon, Michel, 68 boulevard Pasteur, F-75015 Paris (FR)**

(72) Inventeur: **Darmon, Michel, 68 boulevard Pasteur, F-75015 Paris (FR)**

(74) Mandataire: **Bouju, André, Cabinet Bouju 38 avenue de la Grande Armée, F-75017 Paris (FR)**

(56) Documents cités:
**EP - A - 0 021 171**
**FR - A - 2 348 354**
**GB - A - 2 055 754**
**US - A - 3 703 968**
**US - A - 4 059 141**

**FEINWERKTECHNIK, vol. 65, no.10, octobre 1961, pages 359-363; W. RATH: "Trägheitswirkungen an verschiedenen Ausführungsformen des Hookeschen Schlüssels"**
**MECANISM 72, INSTITUTION OF MECHANICAL ENGINEERS C 87/72, 1972, pages 90-97; M.J. GILMARTIN et al.: "Type and mobility analysis of the spherical four-link mechanism"**
**GETRIEBEBEISPIEL-ATLAS, 1973, VDI Verlag GmbH, Düsseldorf, DE;**

(56) Entgegenhaltungen: (Fortsetzung)
**MECHANISM, LINKAGES AND MECHANICAL CONTROLS, 1966, pages 72-77, McGraw-Hill Book Co., New York, US; S. RAPPAPORT: "5 Linkages for straight-line motion"**
**MACHINE DESIGN, vol. 22, no. 1, janvier 1950, pages 90-92; H.G. CONWAY: "Straight-line linkages"**
**VDI-BERICHTE, vol. 29, 1958, pages 103-108; J. VOLMER: "Koppelkurvenatlas als Mittel zur Konstruktionsvereinfachung"**
**ABSTRACTS OF PAPERS PRESENTED AT ASME MEETINGS, vol. 90, novembre 1968, page 68; F. CHEN: "On a class of spherical linkages**
**B. GROENEVELD: "Geometrical considerations on space kinematics in connection with bennett's mecanism", 1954, pages 55-75, chapitre IV, La Haye, NL; "The motion of the space connected with the connecting-rod A'b'"**

EP 0 159 947 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

La présente invention concerne un mécanisme pour guider au moins un point sensiblement le long d'un segment de cercle même si le centre de ce cercle n'est pas ou que difficilement accessible, et est éventuellement rejeté à l'infini.

On sait assurer un tel guidage au moyen de glissières, solution coûteuse et peu satisfaisante. En effet, le guidage est mal assuré quand la longueur d'appui est faible, il peut se produire des arc-boutements, les surfaces mécaniques de précision sont exposées au choc, au dépôt de poussières abrasives et à la corrosion, les frottements sont importants, les jeux très difficiles et coûteux à éliminer et la transmission du mouvement à travers une paroi étanche est délicate.

Tous ces inconvénients sont éliminés par l'emploi de systèmes articulés. On connaît par exemple d'après le US-A-4 249 427 un mécanisme plan par lequel deux points d'une manette de commande pour automobile sont guidés selon des cercles choisis pour qu'un troisième point placé sur la médiatrice entre les deux premiers et constituant l'extrémité de la manette, ait un mouvement sensiblement rectiligne. Toutefois, on ne recherche avec un tel mécanisme qu'une faible précision et les calculs montrent que dans la configuration décrite l'erreur entre la trajectoire de l'extrémité de la manette et une droite idéale n'est pas aussi réduite que possible. D'autre part, ce document n'enseigne rien concernant le guidage d'un point selon un segment de cercle dont le centre est à distance finie, en particulier hors du plan du mécanisme.

Le but der l'invention est ainsi de procurer un système de guidage qui procure de meilleurs résultats que celui décrit dans le document antérieur précité, et qui repose sur des particuliartés générales permettant de satisfaire de nombreux besoins de trajectoires rectilignes ou courbes.

L'invention vise ainsi un mécanisme de guidage comprenant une pièce porteuse, une pièce mobile à laquelle est lié géometriquement un point mené, en vue de guider le point mené par rapport à la pièce porteuse selon une trajectoire utile sensiblement en segment de cercle dont le centre est éventuellement rejeté à l'infini, et des moyens pour guider la pièce mobile de façon qu'un premier et un second axes principaux géométriquement fixes par rapaport à la pièce mobile suivent par rapport à la pièce porteuse un premier cône à base sensiblement circulaire et respectivement un second cône ayant tous deux pour sommet le centre précité.

Suivant l'invention, le mécanisme est caractérisé en ce que, dans une position de référence, un plan principal portant les axes principaux porte également l'axe du premier cône et forme avec le plan normal au second cône et passant par le second axe principal un angle U, orienté du plan principal vers le plan normal et sensiblement compris entre 60 et 120°, et en ce que l'angle (x) entre un axe mené joignant le centre au point mené et le second axe principal vérifie sensiblement la relation (1):

$$\sin 2x = \frac{2 \sin h}{\sin r} [\sin (h+r)] \frac{\sin (U-V)}{\sin U}$$

dans laquelle, quand le centre est rejeté à l'infini, $h \neq r$ et $V \neq 0$, et dans laquelle:

r désigne l'angle au sommet du premier cône;

h désigne l'angle entre les deux axes principaux, r et h étant des grandeurs algébriques considérées de même signe si, en position de référence, le premier axe principal est entre l'axe du premier cône et le second axe principal, et de signe contraire dans le cas contraire; et

V désigne l'angle entre le plan principal et un plan passant par le second axe principal et par le point mené, cet angle étant orienté du plan principal vers le plan passant par le second axe principal et par le point mené, U et V étant mesurés selon la même règle de signe.

Le mécanisme ainsi défini peut entre autres être réalisé sous la forme d'un quadrilatère articulé en ses sommets selon quatre axes qui concourrent tous ensemble au centre de la trajectoire utile du point mené, ou alors sont tous parallèles si ledit centre est à l'infini. Les quatre côtés du quadrilatère sont constitués par la pièce porteuse, la pièce mobile, et deux manivelles articulées chacune à la pièce mobile en l'un respectif des axes principaux et à la pièce porteuse selon l'axe du cône portant la trajectoire de cet axe principal.

Par construction, tous les points liés à la pièce mobile suivent par rapport à la pièce porteuse des trajectoires portés par des sphères ayant le centre précité. L'invention définit en combinaison d'une part une gamme de configurations du mécanisme et, d'autre part, dans un mécanisme ayant l'une au choix de ces configurations un axe mené passant par le centre et dont n'importe quel point a une partie de trajectoire s'approchant beaucoup d'un arc de cercle ayant le centre précité, ou d'un segment de droite lorsque ce centre est rejeté à l'infini.

Il est ainsi possible d'associer à la pièce mobile un organe mené, et ceci de façon telle que l'un des points de cet organe suive une trajectoire circulaire ou rectiligne, et ceci sans avoir accès au centre du cercle ni sans avoir recours à des glissières de longueur correspondante. L'association entre la pièce mobile et l'organe mené est telle que le point précité de l'organe mené soit sur l'axe mené lié à la pièce mobile. L'axe mené n'est pas nécessairement matérialisé. Il n'est fondamentalement qu'une donnée géométrique du système. Le point mené peut par exemple être la pointe de l'aiguille indicatrice d'un dispositif de mesure. L'aiguille est alors fixée à la pièce mobile de façon que la pointe soit sur l'axe mené, mais l'axe mené ne correspond pas nécessairement à un axe mécanique ou géométrique de l'apparail. Cependant, en montant, par exemple en fixant sur la pièce mobile l'organe mené de façon telle que l'un des axes de ce dernier coïncide en permanence avec l'axe mené, on aboutit au résultat supplémentaire que ledit axe de l'organe mené vise constamment le centre du mécanisme ou une direction opposée à ce dernier. La pièce mobile peut ainsi porter un outil rotatif, tel qu'un foret de perçage, dont l'axe coïncide avec l'axe mené pour effectuer des perçages en différentes positions angulaires sur une pièce présentant par exemple une surface cylindrique concave ou convexe dont l'axe passe par le centre du mécanisme de guidage. La pièce mobile peut encore porter un dispositif émetteur, récepteur ou capteur quelconque, qu'on doit pouvoir régler dans une certaine plage angulaire autour d'un axe peu accessible.

D'autres particularités et avantages de l'invention ressortiront encore de la description ci-après.

Aux dessins annexés, donnés à titre d'exemples non limitatifs:

la figure 1 est une vue schématique en perspective d'un mécanisme selon l'invention, assurant le guidage d'un point mené selon une trajectoire en segment de cercle de rayon fini;

la figure 2 est une vue en perspective du mécanisme de la figure 1 en position de référence;

la figure 3 est une vue en perspective d'une variante de réalisation du mécanisme de la figure 1;

la figure 4 est une vue en plan d'un mécanisme plan selon l'invention, en position de référence;

la figure 5 est une vue schématique illustrant diverses positions du mécanisme de la figure 4;

la figure 6 est une vue schématique en perspective d'une rectifieuse comportant le mécanisme des figures 4 et 5;

la figure 7 est une vue en plan d'une variante du mécanisme de la figure 4, en position de référence;

les figures 8 et 9 sont des vues simplifiées de deux autres variantes du mécanisme de la figure 4;

les figures 10 et 11 sont des vues partielles de deux autres variantes du mécanisme de la figure 4;

les figures 12 à 14, 16, 19 et 20 sont des vues en plan d'autres variantes du mécanisme de la figure 4;

la figure 15 est un schéma de calcul pour l'éboration de la réalisation de la figure 14;

les figures 17 et 18 sont des vues en plan de grilles rétractables utilisant un mécanisme analogue à celui de la figure 16;

la figure 21 est une vue schématique en élévation latérale d'une table élévatrice utilisant un mécanisme analogue à celui de la figure 20;

la figure 22 est une vue schématique en élévation latérale d'un bras articulé selon l'invention;

la figure 23 est une vue en perspective d'une variante du bras de la figure 22;

la figure 24 est une vue schématique en perspective d'une variante du mécanisme de la figure 1;

les figures 25 et 26 sont des vues schématiques en perspective de deux mécanismes de lève-vitre cylindrique pour automobile selon l'invention;

la figure 27 est une vue d'une rectifieuse, le mécanisme de guidage des tables étant vu en coupe selon le plan XXVII-XXVII de la figure 28;

la figure 28 est une vue en coupe selon le plan XXVIII-XXVIII de la figure 27; et

la figure 29 est une vue analogue à la figure 26, montrant une variante du lève-vitre.

Dans l'exemple représente à la figure 1, dans lequel on a volontairement donné aux pièces une forme quelconque pour ne laisser apparaître que les particularités géométriques ayant une fonction dans le guidage selon l'invention, le mécanisme comprend une pièce porteuse rigide 1, une pièce mobile rigide 2 portant un point mené M porté par un axe géométrique mené L passant par un centre O. La distance entre le point mené M et le centre O est finie.

Le mécanisme comprend en outre des moyens pour qu'un premier et un second axes géométriques principaux B et respectivement C liés à la pièce mobile 2 décrivent par rapport à la pièce porteuse 1 respectivement un premier cône C<u>b</u> et un second C<u>c</u> tous deux à base circulaire. Les cônes C<u>b</u> et C<u>c</u> ont pour sommet commun le centre O, mais leurs axes A et respectivement D rigidement liés à la pièce porteuse 1 sont distincts.

Dans l'exemple représenté, les moyens précités comprennent une manivelle 3 articulée à la pièce porteuse 1 selon l'axe A et à la pièce mobile 2 selon l'axe B, et une manivelle 4 articulée à la pièce porteuse 1 selon l'axe D et à la pièce mobile 2 selon l'axe C.

Comme le montre la figure 2, les angles entre les axes A et B, B et C, C et D, et A et D sont choisis de façon que dans une position de référence où un plan principal PP portant les axes principaux B et C passe également par l'axe A, ledit plan principal PP forme avec le plan passant par les axes C et D un angle <u>U</u> orienté du plan PP vers le plan passant par les axes C et D, l'angle <u>U</u> étant compris entre 60 et 120°, et plus particulièrement exactement égal à 90° dans l'exemple représenté.

En outre, l'angle <u>x</u> entre l'axe L et le second axe principal C vérifié la relation (1):

$$\sin 2x = \frac{2 \sin h}{\sin r} [\sin (h+r)] \frac{\sin (U-V)}{\sin U}$$

dans laquelle, en référence aux figures 1 et 2 où les angles entre droites sont figurés par un trait simple et les angles entre plans par un trait double:

<u>r</u> désigne l'angle au sommet du cône C<u>b</u>;

<u>h</u> désigne l'angle entre les deux axes principaux B et C;

<u>V</u> désigne l'angle entre le plan principal PP et un plan passant par l'axe C et l'axe L, l'angle <u>V</u> étant orienté du plan PP vers le plan passant par les axes C et L, et mesuré avec la même règle de signe que U.

<u>r</u> et <u>h</u> sont des grandeurs algébriques qui sont de même signe dans l'exemple représenté où l'axe B est entre les axes A et C en position de référence, et serait de signe contraire dans le cas contraire. <u>x</u> n'a par contre pas de signe car l'angle orientée V définit déjà sur quelle demi-droite se situe le point M par rapport au plan principal et à l'axe C.

Dans ces conditions, lorsque le mécanisme évolu est au voisinage de sa position de référence, le point M décrit une trajectoire utile TU très voisine d'un segment de cercle centré sur le centre O. L'erreur que présente la trajectoire TU par rapport à un cercle parfait est en théorie un infiniment petit par rapport à la longueur de la trajectoire. L'invention fournit ainsi un moyen mécanique permettant de faire décrire à un point, moyennant une tolérance compatible avec la mécanique de précision, un segment de cercle sans avoir recours à aucun moyen de guidage provenant du centre du cercle ou d'une glissière circulaire coaxiale.

En outre, si la pièce mobile 2 porte un dispositif mené de façon que l'axe de ce dispositif coïncide avec l'axe mené L, on est assuré que l'axe du dispositif passe toujours par le centre O. Ainsi, il est par exemple possible de fixer selon l'axe L une perçeuse dont le foret 5 (seul représenté) est mobile en rotation autour de son axe L. La perçeuse est déplaçable en translation selon l'axe L pour effectuer l'avance d'usinage (voir double flèche 10). On peut ainsi effectuer des perçages ayant différentes orientations angulaires dans une surface cylindrique dont l'axe coïncide avec l'axe du cercle dont T.U. est un segment. Les particularités du mécanisme permettent de répartir les perçages sur un même segment de cercle, et de régler leur profondeur par mesure de l'avance par rapport à la pièce 2.

Un tel dispositif 1, 2, 3, 4 est encore applicable par exemple en tomographie, en diffraction des rayons X, at plus généralement aux techniques selon lesquelles des appareils ou des pièces doivent décrire un cercle en visant son centre ou la direction opposée à son centre. Il suffit dans ce cas de fixer l'appareil ou la pièce en question à la pièce mobile 2 de façon que l'axe de visée de l'appareil ou de la pièce coïncide avec l'axe mené L.

Toujours dans le cas où le point O est à distance finie, l'exactidude de la trajectoire utile du point mené M est améliorée si, comme le montre la figure 3, l'angle V est choisi nul et l'angle U très proche de 90° ou égal, de sorte que la droite L est dans la plan principal PP.

Les résultats sont encore meulleurs lorsqu'est en outre vérifiée dans ce cas la relation:

$$2 \sin^2 r \sin^2 x - \sin h [\sin h - \sin r \cos(h+r)] = 0.$$

On appelle de façon condensée «mécanismes sphériques» les mécanismes conformes à l'invention dans le cas où le centre O est à distance finie. En effet, tous les points de ces mécanismes se déplacent sur des sphères concentriques de centre O.

Comme le montre la figure 4, quand le centre O est rejeté à l'infini, tous les axes deviennent parallèles entre eux et perpendiculaires au plan du mécanisme, les cônes Cb et Cc deviennent respectivement des cylindres, et les angles entre les axes, de même que le sinus de ces angles, ne sont plus appréciables que par la distance séparant lesdits axes. On donne à ces distances les mêmes noms, r, h, x que les angles correspondantes des figures 1 à 3. La distance entre les axes C et D est désignée par R. Les angles U et V deviennent des angles entre des droites. On dit alors que le mécanisme est «plan». La relation (1) devient ainsi la relation (1'):

$$X = \frac{h}{r} (h+r) \frac{\sin (U - V)}{\sin U}$$

Dans le cas où O est rejeté à l'infini, on choisit:

$$h \neq r; \; V \neq 0$$

U étant choisi strictement égal à 90°, l'équation 1' devient:

$$x = \frac{h}{r} (h+r) \cos V \; (2)$$

Dans l'exemple représenté, V est déterminé par la relation (3):

$$V = - \text{Arc tg}[(\frac{h}{r} - 1) \frac{R}{h+r}]$$

Cette formule est telle que, lorsque $\frac{h}{r} - 1$ et $h+r$ sont de même signe, le point M défini par x et V et le point D sont dans la position de référence de part et d'autre du plan principal PP.

Losque le mécanisme évolue au voisinage de la position de référence représentée à la figure 4, le point M suit alors une trajectoire utile TU qui présente par rapport à un segment de droite idéal une erreur qui est un infiniment petit d'ordre 5 par rapport à sa longueur.

La figure 5 montre schématiquement avec des traits différents six positions du mécanisme, d'après lesquelles on peut voir que sur une course appréciable, la trajectoire utile du point mené M s'écarte très peu d'un segment de droite tracé en trait mixte.

Comme le montre la figure 6, le mécanisme schématiquement représenté aux figures 4 et 5 est applicable à une machine-outil et en particulier à une rectifieuse. Les axes d'articulation A à D sont disposés horizontalement. La pièce porteuse 1 est solidaire d'un socle 6 portant également une table 7 dont la surface supérieure est horizontale et dont la position est réglable en direction verticale.

Les axes A et D sont disposés l'un par rapport à l'autre de façon que la trajectoire TU des points de l'axe L soit dans un plan horizontal. La pièce mobile 2 porte des outils rotatifs 8 d'axe L qui surplombent la table 7 et sont couplés en rotation à un moteur 9 de même axe. Le bâti du moteur 9 est fixé à la pièce mobile 2.

Pour rectifier une pièce, on la fixe sur la table 7, on règle la hauteur de la table 7 pour que la pièce soit en contact tangent avec une meule 8, et on actionne en va-et-vient la manivelle 3 ou directement la pièce mobile 2. L'axe L se déplace dans un plan horizontal avec une approximation au moins aussi bonne que si cet axe L était guidé par une glissière.

La figure 5 montre qu'une course relativement grande du point mené M n'implique qu'une course relativement faible du second axe principal C. C'est pourquoi il est possible sans grand inconvénient de réduire l'encombrement du mécanisme en remplaçant, comme le montre la figure 7, la manivelle 4 par une glissière profilée 11 portée par la pièce porteuse 1 et guidant un tenon cylindrique 12, d'axe C, fixé à la pièce mobile 2. La glissière 11 peut avoir un profil circulaire dont la ligne moyenne Cc a pour axe l'axe D et pour rayon la valeur R vérifiant les formules (2) et (3), auquel cas le guidage du point mené M n'est pas affecté. Dans une autre réalisation, la glissière 11 peut avoir un profil simplifié rectiligne réalisant une approximation du profil circulaire précité.

Dans la réalisation représentée, le profil de la glissière 11 suit une ligne moyenne Cr qui, à partir de la position Cd de l'axe C lorsque le mécanisme est en position de référence (trait plein à la figure 7), suit la ligne moyenne Cc sur une certaine distance puis s'en écarte légèrement en s'éloignant de l'axe D par rapport à la ligne Cc. Ainsi, le guidage du point M n'est pas affecté dans les positions Mc, Md, Me (figure 5) proches de la position Md correspondant à la position de référence du mécanisme. Par contre dans les positions Ma, Mb, Mf éloignées de la position Md, la glissière suivant la ligne moyenne Cr tend à corriger l'erreur qu'introduit le guidage strictement circulaire de l'axe C. De façon surprenante, comme le montrent les positions Ma et Mf à la figure 7, la correction est favorable aux deux extrémités de la trajectoire TU.

Dans cette réalisation, la glissière 11 étant petite devant la course du point mené M, il est possible de lui donner une grande précision mécanique sans grever exagérément le prix de revient du mécanisme relativement aux performances de ce dernier.

Lorsque la manivelle 4 est remplacée par une glissière R représente le rayon de courbure de celle-ci en position de référence.

Le mécanisme de la figure 4 ou de la figure 7 est tel qu'à chaque position de l'axe C (hormis la position de référence Cd) correspondant deux positions du point M et deux positions de l'axe B. Ainsi, le dispositif de la figure 7 ne peut corriger exactement que l'une des extrémités de la trajectoire TU, ou alors n'effectuer qu'une correction constituant un compromis pour les deux extrémités. En effet, une position du point C corrigeant exactement une position correspondante du point M à une extrémité de la trajectoire TU ne corrige en général pas exactement l'autre position du point M qui correspond à la même position de l'axe C et qui est voisine de l'autre extrémité de la trajectoire TU.

Par contre, à chaque position utile de l'axe B ne correspond qu'une position du point mené M sur la trajectoire TU. Ainsi, un autre mode de réalisation de l'invention comporte des moyens correcteurs qui déplacent au moins un axe du mécanisme en fonction de la position de l'axe B dans le sens de la prolongation de la trajectoire utile TU du point mené M. Il est bien ainsi possible de corriger indépendamment l'une de l'autre les deux extrémités de la trajectoire TU.

Dans l'exemple représenté à la figure 8, l'axe D de la manivelle 4 au lieu d'être porté par la pièce porteuse 1, est porté par l'extrémité d'un levier 15 dont un axe S, parallèle aux axes ABCD dans le cas représenté d'un mécanisme plan, ou passant par le centre O dans le cas d'un mécanisme sphérique, est articulé à la pièce porteuse 1. A son extrémité opposée à l'axe D, le levier 15 porte un téton 13 engagé dans une glissière 14 solidaire de la manivelle 3. La glissière 14 est profilée de façon à donner au levier 15 pour chaque position angulaire utile de la manivelle 3 une inclinaison donnant à l'axe D une position appropriée pour que la trajectoire TU du point mené M soit conservée inchangée au voisinage de la position de référence, mais soit améliorée à ses deux extrémités.

Dans l'exemple représenté à la figure 9, l'axe D relie la manivelle 4 directement à la pièce porteuse 1.

Par contre, l'axe A articule la manivelle 3 avec une biellette 16 dont un second axe T est articulé à la pièce porteuse 1 en une position telle que le plan AT est perpendiculaire au plan AB lorsque le mécanisme est en position de référence. En outre, la manivelle 3 porte au-delà de l'axe A un téton 17 engagé dans une glissière 18 portée rigidement par la pièce porteuse 1. A chaque position angulaire de la manivelle 3 correspond une position donnée du téton 17 dans la glissière 18 grâce à l'action conjointe de la biellette 16 et du profil de la glissière 18. Cette dernière est profilée pour aboutir, concernant la trajectoire du point mené M, au même résultat que la réalisation de la figure 8. Ainsi, dans cet exemple, la position angulaire de la manivelle 3 influe sur la position de son propre axe d'articulation A.

Dans l'exemple de la figure 10, la manivelle 3 porte rigidement une came à largeur constante 19 au voisinage de l'axe A qui comme précédemment relie de façon articulée la manivelle 3 à une biellette 16. La came 19 est engagée dans une glissière profilée 21 portée rigidement par la pièce porteuse 1.

A chaque position angulaire de la manivelle 3 correspond une position angulaire de la came 19 dans la glissière 21. Le profil de la came 19 est étudié pour aboutir à une extension de la trajectoire utile du point mené M.

Comme le montre la figure 11 où la came 19 n'a pas été représentée dans un but de clarté, la réalisation de la figure 10 peut être modifiée en remplaçant la biellette 16 par un téton 22 porté par la manivelle 3 selon l'axe A et engagé dans une rainure 23 solidaire de la pièce porteuse 1.

L'exemple de la figure 11 réalise la correction de la trajectoire sans ajout d'articulation et en introduisant deux glissières (21 et 23) qui peuvent être courtes. La rainure 23 peut être réalisée selon un profil rectiligne parallèle au plan AB en position de référence du mécanisme. Certes la trajectoire de l'axe A par rapport à la pièce porteuse 1 n'est alors plus exactement la même que celle définie par la biellette 16 de la figure 10, mais le profil de la came 19 peut être modifié en conséquence.

La figure 12 concerne un mode de réalisation présentant par rapport au mode de réalisation de la figure 4 un encombrement réduit pour une trajectoire utile TU de longueur donnée.

Dans cet exemple, la pièce mobile 2 portant le point M demeure guidée de façon que deux axes principaux B et C liés à ladite pièce 2 décrivent les trajectoires Cb et Cc définies plus haut autour des axes A et D respectivement. Cependant, la pièce mobile 2 ne s'étend pas jusqu'à l'axe géométrique C et la pièce porteuse 1 ne s'étend pas jusqu'à l'axe D.

La manivelle 3 porte un premier axe principal intermédiaire B1 par lequel elle est articulée à une pièce intermédiaire 24 dont un second axe principal intermédiaire C1 est guidé selon une trajectoire cylindrique autour d'un axe D1 lié à la pièce porteuse 1. Ces moyens de guidage comprennent dans l'exemple représenté une manivelle 26 articulée selon les axes C1 et D1 avec les mobiles 24 et 1 respectivement. La pièce intermédiaire 24 porte un point mené intermédiaire M1.

La distance entre les axes A et B1 est inférieure à la distance entre les axes A et B. L'angle entre les segments AB, AB1 est choisi à volonté. En outre, la disposition relative des axes A, B1, C1 et D1 entre eux et du point M1 par rapport aux axes B1 et C1 est telle que le système constitué par les manivelles 3 et 26 et la pièce intermédiaire 24 se déduit du système A, B, C, D nécessaire pour guider le point mené M selon la trajectoire TU voulue, par une similitude dont le centre est sur l'axe A et dont le rapport complexe est celui par lequel il faut multiplier le vecteur $\overrightarrow{AB}$ pour obtenir le vecteur $\overrightarrow{AB1}$. Le point mené intermédiaire M1 satisfait à la relation (1') et même dans l'exemple représenté aux relations (2) et (3) relativement aux axes A, B1, C1, D1 et suit donc une trajectoire utile sensiblement rectiligne quand la pièce intermédiaire 24 évolue au voisinage de sa position de référence.

La pièce intermédiaire 24 est raccordée à la pièce mobile 2 par une biellette 27 articulée à la pièce 24 selon un axe passant par le point mené intermédiaire M1 et à la pièce mobile selon un axe N positionné de façon que le vecteur $\overrightarrow{M1N}$ soit égal (équipollent) au vecteur $\overrightarrow{B1B}$.

Grâce à cette liaison à parallélogramme déformable (2, 24, 3, 27), la pièce mobile 2 a constamment même vitesse angulaire que la pièce intermédiaire 24. Comme cette dernière est guidée de façon à avoir deux axes géométriques B1, C1 décrivant des trajectoires cylindriques, on est bien assuré que la pièce mobile 2 est guidée de façon à avoir deux axes géométriques B, C décrivant des trajectoires cylindriques semblables à celles des axes B1 et C1, et possède par conséquent un point M qui satisfait aux relations (2) et (3) par rapport aux axes A, B, C et D, les axes C et D n'étant pas matérialisés mais ayant une position bien définie par rapport aux pièces 2 et 1 respectivement.

Le point M peut être trouvé par construction géométrique à partir des axes A, B, C, D. Cependant, une démonstration géométrique simple permet d'établir que $\overrightarrow{MB}$ se déduit de $\overrightarrow{BN}$ par une similitude de centre B et de même rapport que celle de centre A faisant passer $\overrightarrow{AB1}$ à $\overrightarrow{AB}$; ce mode de détermination évite d'avoir à déterminer la position des axes non matérialisés C et D.

La trajectoire utile du point mené M se déduit de celle du point M1 par la similitude de centre A faisant passer de $\overrightarrow{AB1}$ à $\overrightarrow{AB}$. Comme le module de $\overrightarrow{AB}$ est plus grand que celui $\overrightarrow{AB1}$, la trajectoire TU du point mené M est plus grande que celle du point mené M1.

L'exemple de la figure 13 est analogue à celui de la figure 12 excepté que la biellette 27 est articulée à la pièce intermédiaire 24 en un axe G espacé du point M1, et à la pièce mobile 2 en un axe H de façon que les axes B, B1, G, H soient aux quatre sommets d'un parallélogramme déformable dont deux côtés opposés sont respectivement liés aux pièces 2 et 24.

Comme en effet la liaison par parallélogramme déformable entre les pièces 2 et 24 a pour simple but de transmettre à la pièce mobile 2 la vitesse angulaire de la pièce intermédiaire 24, il n'est pas nécessaire que l'un des sommets du parallélogramme liés à la pièce intermédiaire soit constitué par le point mené intermédiaire M1.

Dans l'exemple de la figure 13 on a quand même déterminé la position du point M1 et l'axe théorique N qui lui est associé, de façon à déterminer le point M par la similitude de centre B faisant passer de $\overrightarrow{BN}$ à $\overrightarrow{BM}$, comme exposé plus haut à propos de la figure 12, mais le point M1 et l'axe N ne sont pas matérialisés mécaniquement.

Dans l'exemple de la figure 14, la pièce intermédiaire 24, au lieu d'être guidée directement par des manivelles 3 et 26 de façon que deux de ses axes B1 et C1 suivent des trajectoires circulaires, est à son tour guidée par un montage analogue à celui servant à guider la pièce mobile 2 de la figure 13. Ce montage comprend un seconde pièce intermédiaire 33 dont un premier B2 et un second C2 axes principaux intermédiaires sont guidés suivant des trajectoires cylindriques respectivement par la manivelle 3 et une manivelle 34 articulées à la pièce porteuse 1 en A et D2 respectivement.

Les pièces intermédiaires 24 et 33 forment les deux côtés opposés d'un parallélogramme déformable comprenant en outre la manivelle 3 et une biellette 36.

Comme dans la réalisation précédente, la pièce intermédiaire 24 et la pièce mobile 2 forment les deux côtés opposés d'une liaison à parallélogramme déformable dont un troisième côté est constitué par la biellette 27 et un quatrième côté par la biellette 36 qui possède un troisième axe pour son articulation avec la pièce mobile 2.

Dans cette réalisation, aucun des axes principaux B et C de la pièce mobile 2 n'est réalisé mécaniquement, mais on est certain d'après le montage réalisé que ces axes existent et on sait retrouver le point mené M. Pour cela, on détermine le point mené intermédiaire M1 lié à la pièce 24 par la méthode utilisée dans l'exemple de la figure 13 pour déterminer d'après la position des axes B1, C1, D1 le point mené M et les axes B et C, puis on réapplique une seconde fois la méthode pour trouver le point mené M à partir du point mené intermédiaire M1.

Selon une méthode de détermination illustrée à la figure 15, on construit le parallélogramme théorique ayant pour sommets les axes B1, B2, un axe passant par le point mené intermédiaire M2 lié à la pièce 33, un axe N1 lié à la pièce intermédiaire 24 et se déduisant des trois autres d'après les propriétés du parallélogramme. On détermine le point mené intermédiaire M1 lié à la pièce intermédiaire 24 par similitude de centre B1 faisant passer de $\overrightarrow{B1N1}$ à $\overrightarrow{B1M1}$ identique à celle de centre A faisant passer de $\overrightarrow{AB2}$ à $\overrightarrow{AB1}$. On prolonge ensuite la biellette théorique $\overrightarrow{M2N1}$ jusqu'à un axe J d'articulation avec la pièce mobile 2 de façon que le vecteur $\overrightarrow{N1J}$ soit égal au vecteur $\overrightarrow{GH}$ de la figure 14. On trace ensuite le parallélogramme déformable N1JNM1, N étant un axe porté par la pièce 2 et se déduisant des trois autres d'après les propriétés du parallélogramme. On détermine alors M par similitude de centre J faisant passer de $\overrightarrow{JN}$ à $\overrightarrow{JM}$ identique à celle de centre M2 faisant passer de $\overrightarrow{M2N1}$ à $\overrightarrow{M2J}$.

Comme le montre la construction pointillée à la figure 14, il est possible d'augmenter à volonté le nombre d'étages d'amplification entre un système trois barres de base tel que celui constitué par les pièces 3, 33, 34 et un point mené Mo final.

Les étages pouvant être orientés à volonté les uns par rapport aux autres selon l'angle formé par les pièces telles que 3 ou 36, on peut en multipliant les étages donner au mécanisme de formes très diverses compte tenu de la place disponible.

Le mode de réalisation de la figure 16 comprend une structure plane 1, 2, 3, 4 vérifiant au moins la relation (1') et susceptible de prendre la position de référence définie plus haut. A cette structure sont ajoutés des moyens pour que l'axe principal B, un axe passant par le point mené M, un axe d'articulation secondaire B' et un axe passant par un point mené secondaire M' soient maintenus aux sommets d'un parallélogramme déformable. Une pièce menée 28 est articulée à la pièce mobile 2 selon l'axe passant par le point mené M et à une biellette 29 selon l'axe passant par le point mené secondaire M'. La biellette 28 est articulée selon l'axe d'articulation secondaire B' à une autre biellette 31 et à une biellette ou manivelle secondaire 32. La biellette 31 est articulée à la pièce mobile 2 selon l'axe principal B. La manivelle secondaire 32 est articulée à la pièce porteuse 1 selon un axe A' disposé de façon telle que les manivelles 3 et 32 sont parallèles et forment les deux côtés opposés d'une liaison à parallélogramme déformable comprenant en outre la pièce porteuse 1 et la biellette 31.

Grâce à ce dernier parallélogramme déformable, la biellette 31 reste toujours parallèle à elle-même relativement à la pièce porteuse 1, et grâce au premier parallélogramme déformable, la pièce menée 28 reste toujours parallèle à elle-même relativement à la biellette 31 donc à la pièce porteuse 1. Ainsi, tous les points de la pièce 28 ont une trajectoire utile T.U. sensiblement selon une croite.

La figure 17 montre l'application du dispositif de la figure 16 à une grille pliante du type utilisé pour les ascenseurs ou la protection des vitrines de magasins.

Un mécanisme élémentaire SI de la grille comprend trois barres d'accouplement parallèles, à savoir deux barres extrêmes 1, 28 constituant respectivement la pièce porteuse et la pièce menée, et une barre d'accouplement médiane 31 constituant la biellette 31 de la figure 16. La barre 1 est destinée à être fixée le long d'un bord de l'ouverture à obturer.

Il n'est pas seulement prévu une seule manivelle 32 mais un grand nombre de telles manivelles 32 qui avec la manivelle 3 sont régulièrement réparties et en plus de guider la barre 31 par rapport à la barre 1, contribuent à fermer suffisamment l'espace entre les barres 1 et 31. Les biellettes 29 sont en nombre égal à celui des manivelles 32 et contribuent avec la branche BM de la pièce mobile 2 à fermer suffisamment l'espace entre les barres 31 et 28.

La configuration du mécanisme est choisie pour vérifier la relation (2), pour qu'en position de référence la barre 31 soit sensiblement dirigée selon la bissectrice de l'angle entre les manivelles 32 et les biellettes 29, pour que la trajectoire utile TU soit sensiblement perpendiculaire aux barres 1, 31, 28, et pour que les manivelles 32 ou 3 aient même longueur que les biellettes 29 ou bras BM.

La barre 28 constitue la barre extrême porteuse d'un second mécanisme SII qui est symétrique du mécanisme SI selon un plan perpendiculaire aux barres 1, 31, 28 puis décalé d'une distance correspondant à l'écartement entre les barres 1 et 28 précitées.

De plus, chaque biellette 29 ou bras BM du mécanisme SI est prolongée rigidement par une manivelle 32 ou 3 du mécanisme SII; les trois axes d'articulation B', M', B'' ou B', M', B ou B, M, B'' de chaque pièce ainsi constituée commune aux deux mécanismes élémentaires SI et SII sont coplanaires.

De même, la pièce menée 28 du mécanisme SII constitue la pièce porteuse d'un mécanisme SIII relié au mécanisme SII et agencé par rapport à ce dernier comme le mécanisme SII par rapport au mécanisme SI.

On place ainsi les uns à la suite des autres autant de mécanismes élémentaires SI, SII, SIII, ... compte tenu de la longueur de grille nécessaire en direction perpendiculaire aux barres.

Le fait de déplacer n'importe laquelle des barres 28, 31, 28', ... transversalement à elle-même entraîne l'ouverture ou la fermeture de toute la grille par éloignement ou rapprochement desdites barres entre elles.

L'invention permet ainsi de réaliser une grille escamotable qui, contrairement aux grilles classiques à croisillons, ne comporte aucune mobile coulissante.

On notera cependant que l'inclinaison du bras BM de chaque mécanisme $S_n$ détermine l'inclinaison de la manivelle 3 du mécanisme $S_n + 1$. Comme le bras BM et la manivelle 3 n'ont pas toujours les mêmes vitesses angulaires, l'espacement des barres telles que 1 et 28 des mécanismes succesifs SI, SII, SIII, ... peut être irrégulier. La grille de la figure 18 remédie à cet inconvénient. Cette grille est analogue à celle de la figure 17 excepté que la barre extrême menée 28 du premier mécanisme SI constitue également la barre extrême menée du second mécanisme SII, dont la barre extrême porteuse 1' constitue également la barre extrême porteuse du troisième mécanisme SIII et ainsi de suite. De même, les biellettes 29 ou bras BM du mécanisme SI sont prolongées par les biellettes 29 ou bras BM du mécanisme SII, et les biellettes ou manivelles 32 ou 3 du mécanisme SII sont prolongées par les biellettes ou manivelles 32 ou 3 du mécanisme SIII et ainsi de suite. Les trois axes d'articulation des biellettes 29 ou manivelles 32 communes à deux mécanismes adjacents sont coplanaires.

Il est ainsi assuré que quel que soit l'état de déploiement de la grille, tous les mécanismes SI, SII, SIII, ... sont exactement dans le même état.

La réalisation de la figure 19 permet d'assurer le déplacement parallèlement à elle-même de la pièce menée 28 avec deux biellettes de moins que la réalisation de la figure 16.

Dans cette réalisation qui ne sera décrite qu'en ce qui concerne ses différences par rapport à celle de la figure 4, la manivelle 3 porte un axe dit «de parallélisme» E qui est guidé relativement à la pièce 28 selon une trajectoire cylindrique à base circulaire $C_e$ d'axe F. Ce guidage est assuré par une biellette de parallélisme 37 articulée selon l'axe, dit «axe mené secondaire» F avec la pièce menée 28 et selon l'axe E avec la manivelle 3.

La position der l'axe E est telle que le facteur complexe par lequel il faut multiplier $\overrightarrow{AB}$ pour obtenir $\overrightarrow{AE}$ soit le même que celui par lequel il faut multiplier $\overrightarrow{CB}$ pour obtenir $\overrightarrow{CM}$.

En outre, la position de l'axe F est déterminée de façon que le vecteur $\overrightarrow{EF}$ soit équipollent à un vecteur $\overrightarrow{DF}$, la position du point F' étant telle que le rapport complexe par lequel il faut multiplier $\overrightarrow{CD}$ pour obtenir $\overrightarrow{CF}$, soit également le même que celui par lequel il faut multiplier $\overrightarrow{CB}$ pour obtenir $\overrightarrow{CM}$.

On peut montrer que $\overrightarrow{FM}$ reste parallèle à lui-même et que tous les points de la pièce menée 28 décrivent donc sensiblement des segments de droite égaux et parallèles quand M suit sa trajectoire utile T.U.

Cela résulte du rôle tout à fait symétrique que jouent la pièce porteuse 1 et la pièce menée 28 l'un par rapport à l'autre, les points M B E F A jouant respectivement les rôles de A B C D M.

En d'autres termes, il est vrée un quadrilatère déformable, F, E, B, M dont les quatre côtés sont proportionnels chacun à un côté correspondant du quadrilatère A, B, C, D. En outre, il est fait en sorte que deux des côtés EB et BM du quadrilatère F, E, B, M ont même vitesse angulaire que les côtés correspondants AB et BC du quadrilatère ABCD. Il en résulte que les deux autres côtés du quadrilatère F, E, B, M ont également même vitesse angulaire que leurs homologues du quadrilatère ABCD, et notamment le côté MF, c'est-à-dire la pièce menée 28, a même vitesse angulaire que le côté AD, c'est-à-dire la pièce porteuse 1, et a donc lui aussi une vitesse angulaire nulle.

On notera que dans les quadrilatères déformables précités, le facteur complexe par lequel il faut multiplier $\overrightarrow{ME}$ pour obtenir $\overrightarrow{MF}$ est le même que celui par lequel il faut multiplier $\overrightarrow{AC}$ pour obtenir $\overrightarrow{AD}$, ce qui procure une autre construction simple de l'axe F à partir des axes M et E.

On notera encore que la trajectoire $C_e$ suivie par l'axe E par rapport à la pièce menée 28 se déduit de la trajectoire $C_c$ suivie par l'axe C par une similitude dont le facteur multiplicateur complexe est le même que celui faisant passer de $\overrightarrow{CD}$ à $\overrightarrow{EF}$. Si la trajectoire de l'axe C est une trajectoire modifiée telle que la trajectoire $C_r$ de la figure 7, l'axe D n'est pas matérialisé et ne se déduit pas avec précision de la courbe $C_r$.

Grâce à la propriété ci-dessus, il est possible comme le montre la figure 19, de déterminer avec exactitude la trajectoire $C_e$ sans connaître l'axe D. Pour cela, on choisit un axe théorique $D_t$ arbitraire, on construit un axe théorique $F_t'$ et une courbe théorique $C_f'$ qui se déduisent respectivement de l'axe C et de la courbe $C_c$ par similitude de centre $D_t$ et de rapport complexe identique à la similitude de centre B faisant passer de $\overrightarrow{BC}$ à $\overrightarrow{BM}$. On détermine ensuite un axe théorique $F_t''$ et une courbe $C_f''$ à partir de l'axe théorique $F_t'$ et de la courbe $C_f'$ par symétrie de centre $D_t$. On détermine la courbe $C_e$ à partir de la courbe $C_f''$ par translation faisant passer de $F_t''$ à E.

Dans le cas de la figure 19 où $C_c$ est circulaire, on vérifie bien que la courbe $C_e$ déterminée selon les deux méthodes décrites est bien la même dans les deux cas.

La réalisation de la figure 20 combine les réalisations des figures 12 et 19. En effet, pour entraîner parallèlement à elle-même une pièce menée 28 dans le cas où la pièce mobile 2 est entraînée par l'intermédiaire d'au moins un étage d'amplification, on pourrait agrandir la manivelle 3 jusqu'à un axe E auquel on articulerait la pièce 37 comme dans la réalisation de la figure 19. Cependant, un tel montage ferait perdre en grande partie l'avantage de faible encombrement résultant de l'utilisation d'étages d'amplification.

Il a été trouvé selon l'invention que l'entraînement de la pièce menée 28 parallèlement à elle-même est réalisable en prolongeant la biellette 27 jusqu'à un axe de parallélisme E1 où elle est articulée à une biellette de parallélisme 38 elle-même articulée à la pièce menée 28 en un axe mené secondaire F1.

La position de l'axe est déterminée de façon que le rapport complexe par lequel il faut multiplier $\overrightarrow{M1N}$ pour obtenir $\overrightarrow{M1E1}$ soit le même que celui par lequel il faut multiplier $\overrightarrow{C1B1}$ pour obtenir $\overrightarrow{C1M1}$. De plus, F1 est choisi tel que le facteur complexe $\underline{n}$ par lequel il faut multiplier le vecteur $\overrightarrow{FE}$ défini par rapport aux axes A, B, C, D comme il a été dit en référence à la figure 19 pour obtenir $\overrightarrow{F1E1}$ soit le même que celui par lequel il faut multiplier $\overrightarrow{AB}$ pour obtenir $\overrightarrow{B1B}$.

On peut montrer en effet que la configuration ainsi obtenue au niveau de la pièce 28 de la figure 20 est en similitude avec celle obtenue au niveau de la pièce 28 de la figure 19 et que par conséquent $F_1M$ reste comme FM parallèle à lui-même.

Dans la pratique, la détermination de F1 est plus facile à partir de C1 et D1. En effet, $\overrightarrow{EF}$ est dans un rapport complexe fixe par rapport à $\overrightarrow{CD}$ qui est dans un rapport complexe fixe par rapport à $\overrightarrow{C1D1}$. Il y a donc bien rapport complexe fixe entre $\overrightarrow{E1F1}$ et $\overrightarrow{C1D1}$.

La figure 20 permet d'apprécier que les moyens de parallélisme 27, 38 ne sont que peu encombrants, alors qu'ils le seraient beaucoup plus si la pièce 28 devait atteindre l'axe théorique F.

La figure 21 montre schématiquement l'application du mécanisme de la figure 20 à la réalisation d'une plate-forme élévatrice. La pièce porteuse 1 est une embase fixe, tandis que la pièce menée 28 est constituée par une table, le reste du mécanisme se trouvant entre ces deux éléments.

L'exemple de la figure 22 confirme ce qui a été dit à propos de celui de la figure 14, à savoir que l'utilisation de plusieurs étages d'amplification permet de donner au mécanisme des conformations avantageuses. Dans cet exemple, un bras articulé, dont la pièce porteuse 1 est destinée à être fixée à un support, est réalisé à partir de deux étages d'amplification. Des références correspondant à celles de la figure 15 permettront de reconnaître les différents constituants.

En outre, un pièce menée 28, par exemple une perceuse dont l'axe est parallèle à la trajectoire TU, est articulée à la pièce mobile 2 selon un axe passant par le point mené M. La biellette 27 est articulée par un axe E1 avec une biellette de parallélisme 38 articulée en F1 à la pièce menée 28.

La position de l'axe de parallélisme E1 est définie de façon que le facteur complexe par lequel il faut multiplier $\overrightarrow{M1N}$ pour obtenir $\overrightarrow{M1E1}$ soit égal au facteur complexe par lequel il faut multiplier $\overrightarrow{C2B2}$ pour obtenir $\overrightarrow{C2M2}$; la position de l'axe F1 est définie de façon que le nombre complexe par lequel il faut multiplier $\overrightarrow{ME1}$ pour obtenir $\overrightarrow{MF1}$ soit le même que celui par lequel il faut multiplier $\overrightarrow{AC2}$ pour obtenir $\overrightarrow{AD2}$. En effet, si l'on considère les quadrilatères déformables AB2C2D2 et MNE1F1, il y a entre A et C2 d'une part et entre M et E1 d'autre part une somme de deux vecteurs qui est la même à un facteur complexe près, et par ailleurs $\overrightarrow{C2D2}$ et $\overrightarrow{E1F1}$ sont égaux au même facteur près.

La pièce menée 28 pourrait aussi être constituée par toute espèce de dispositif: lampe, autre outil d'usinage, par exemple fraiseuse, nacelle élévatrice, par exemple véhicule destiné aux travaux d'entretien en hauteur.

Dans l'exemple de la figure 22, les pièces 3, M2N1J, 24 et 2 travaillent toutes en flexion car elles ont chacune trois axes d'articulation. L'exemple de la figure 23, qui remédie à cet inconvénient, est identique à celui de la figure 22 excepté que l'articulation N1 est remplacée par une articulation entre les pièces 2 et 3 selon l'axe principal B de la pièce mobile 2, qui est tel que B, B1, N1, J sont aux sommets d'un parallélogramme. L'articulation N1 n'est plus matérialisée, de sorte que les pièces M2J et 24 ne sont plus sollicitées en flexion et, comme représenté, peuvent être allégées relativement aux pièces 2 et 3. On notera que l'axe B est commun aux deux parallélogrammes déformables des deux étages d'amplification, et de même à partir de l'axe B, une partie de la pièce 2 et de la manivelle 3 est commune aux deux parallélogrammes.

Dans l'exemple des figures 27 et 28, le socle en L 42 d'une rectifieuse porte rigidement les pièces porteuses 1 et 1' de deux mécanismes identiques comprenant chacun, conformément à l'exemple de la figure 19, une manivelle 3 ou 3' portant un axe E ou E' et une pièce mobile 2 ou 2' articulée à une pièce menée 28 ou 28' par un axe passant par le point mené M. La pièce porteuse 1 ou 1', en forme d'embase, porte en direction de la pièce menée 28, un bossage 43 à l'extrémité duquel est aménagée une piste profilée 11 selon une ligne moyenne telle que Cr de la figure 7, sur laquelle repose un tenon cylindrique 12 porté par la pièce mobile 2 ou 2' selon l'axe C. La pièce menée 28 ou 28' est identique à la pièce porteuse 1 ou 1', mais retournée par rapport à cette dernière de façon que son bossage 43 soit dirigé vers la pièce porteuse 1 ou 1' du même côté de l'axe B que le bossage 43 de cette dernière. La piste 47 selon profil C<u>e</u> portée par le bossage 43 de la pièce menée 28 ou 28' donne appui à un tenon cylindrique 45 porté par la manivelle 3 ou 3' selon l'axe E. Le profil de la piste 47 pour guider l'axe E se déduit du profil de la piste 11 pour guider l'axe C par similitude ayant le rapport complexe par lequel il faut multiplier $\overline{BC}$ pour obtenir $\overline{MB}$. Dans chaque mécanisme, la distance entre les axes A et B est identique à celle entre les axes B et M, la distance entre les axes B et C est identique à celle entre les axes B et E, et les angles $\widehat{MBA}$ et $\widehat{CBE}$ ont même plan bissecteur BI. On a donc bien ainsi le même rapport complexe entre les vecteurs $\overline{MB}$ et $\overline{BC}$ et entre les vecteurs $\overline{BE}$ et $\overline{AB}$.

Dans l'exemple représenté, la distance entre les axes M et B est égale à la distance entre les axes B et C, de sorte que le module du rapport complexe est égal à 1 et par conséquent les profils des pistes 11 et 47 sont identiques à une rotation près.

En outre, la trajectoire utile TU est perpendiculaire à la bissectrice commune BI des angles $\widehat{MBA}$ et $\widehat{CBE}$.

La manivelle 3 ou 3' est identique à la pièce mobile 2 ou 2' après retournement de 180° autour de la ligne médiane BIM du plan bissecteur BI.

Les pièces menées 28 ou 28' et porteuses 1 et 1', toutes identiques, comportent chacune un alésage 48. Un tube 49, dirigé vers la pièce porteuse 1 ou 1', est emmanché et soudé dans l'alésage 48 de la pièce menée 28 ou 28'. L'axe du tube 49 est parallèle à la trajectoire TU du point mené M du mécanisme considéré. Dans ce tube, est montée une broche rotative 51 ou 51'.

Le mécanisme 1, 2, 3, 28 est fixé par sa pièce porteuse 1 à la base horizontale su socle 42. Le mécanisme 1', 2', 3', 28' est fixé par sa pièce porteuse 1' à la branche verticale du socle 42, de façon à se trouver à distance au-dessus du mécanisme 1, 2, 3, 28, l'axe de la broche 51' étant radial par rapport à l'axe de la broche 51. La broche 51 porte une table rotative — ou carrousel — 52, la broche 51' une meule rotative 52'.

Cette rectifieuse comporte un très petit nombre de pièces différentes.

L'exemple représenté à la figure 24, concerne un système «sphérique» du genre de celui de la figure 1, dans lequel tous les axes d'articulation sont coucourrants au centre O. On reconnaît la pièce mobile 2 guidée directement en ses axes principaux B et C par des manivelles 3 et 4 articulées par deux axes respectifs A et D à la pièce porteuse non représentée dans un but de clarté.

En outre, la manivelle 3 est prolongée jusqu'à un axe E par lequel elle est articulée à une biellette de parallélisme 37 articulée selon un axe F à une pièce menée 28. Ainsi, la biellette 37 guide l'axe E selon un troisième cône C<u>e</u> d'axe F lié à la pièce menée 28. On retrouve ici sur la sphère la configuration générale de la figure 19.

Le système satisfait à l'équation (1) et respecte en outre les conditions suivantes:

L'axe E est dans le plan portant les axes A et B.

L'axe E fait avec l'axe A un angle <u>y</u> qui est l'une ou l'autre des racines de l'équation suivante:

$$\sin 2y = \frac{2 \sin (y-r)}{\sin (x-h)} \sin (x+y-h-r)$$

En position de référence (représentée à la figure 24), le plan portant les axes E et F fait avec le plan portant les axes E et B un angle égal à l'angle U (sensiblement égal à $\pi/2$).

Ainsi, quand le mécanisme évolue au voisinage de sa position de référence, la pièce menée 28 est animée d'un mouvement très voisin d'une rotation autour d'un axe XX perpendiculaire à un plan bissecteur entre les axes A et L. La trace K du plan bissecteur précité est représentée dans le plan des axes A et L à la figure 24.

Ce mouvement est encore plus exactement réalisé si l'axe F est positionné de façon que dans la position de référence, l'angle W entre le plan passant par le point mené M et par l'axe C et le plan passant par le point mené M et l'axe F soit sensiblement égal à l'angle entre le plan passant par les axes A et D et le plan passant par les axes A et C.

Dans une réalisation particulière, le mécanisme est ainsi tel que, dans la position de référence, les axes A et L, C et E, D et F sont respectivement confondus. L'axe XX est alors perpendiculaire aux axes A et L.

Dans l'exemple de la figure 25, le mécanisme de la figure 24 est appliqué à la commande d'une vitre latérale descendante cintrée cylindriquement pour automobile, cette vitre constituant la pièce menée 28. Le mécanisme a été dessiné dilaté en épaisseur pour être plus clairement intelligible. On reconnaît les différentes pièces d'après leurs références. Le centre O est porté par l'axe XX de cintrage de la vitre 28 et il est positionné de façon que le plan passant par le centre O et coupant perpendiculairement la vitre 28 soit un plan bissecteur de l'axe A et de la ligne L lorsque le mécanisme est en position de référence. De plus, en position de référence, le plan principal (passant par les axes B et C) est perpendiculaire au plan de la trajectoire voulue pour le point M, c'est-à-dire un segment de cercle centré sur l'axe XX et porté par la vitre 28. Les tiges matérialisant les axes F et M sont fixées rigidement à la vitre 28.

En faisant tourner la manivelle 3 à la main ou à l'aide d'un moteur, la glace 28 est déplacée en restant portée par un cylindre virtuel immobile. Ce dispositif de la vitre par glissières latérales; des glissières peuvent cependant être maintenues pour des questions d'étanchéité, mais n'ayant plus de rôle de guidage, elles ne risquent plus de provoquer de frottement gênant ou de coincement.

Dans l'exemple de la figure 26, le mécanisme de la figure 25 est simplifié en ce sens que pour le guidage de l'axe C, la manivelle 4 est remplacée par une glissière 11 dans laquelle est engagé l'axe C et destinée à être fixée à la pièce porteuse 1 par l'intermédiaire d'un bâti non représenté.

De même, la biellette 37, qui constituait un moyen pour guider l'axe E selon une trajectoire conique d'axe F et de sommet O par rapport à la vitre 28, est remplacée par une glissière fixée à la vitre 28 et dans laquelle est engagé l'axe E pour y être guidé de façon approximativement ou exactement identique à celle assurée par la biellette 37 de la figure 24.

Dans l'exemple des figures 25 et 26, chaque point de la vitre 28 se déplace selon un cercle porté par le cylindre selon lequel la vitre est cintrée, et axée sur l'axe XX de ce cylindre.

Ceci ne convient pas à toutes les applications car dans certaines automobiles, la vitre doit se déplacer obliquement, par exemple pour suivre un montant oblique. En d'autres termes, chaque point de la vitre doit suivre une hélice du cylindre selon lequel la vitre est cintrée.

L'exemple de la figure 29, qui ne sera décrit qu'en ce qui concerne ses différences par rapport à celui de la figure 26, assure cette fonction. La trajectoire hélicoïdale 60 du point mené M est représentée en pontillés sur la vitre 28. L'invention se base alors sur la considération que la trajectoire 60 est peu différente d'un segment de cercle qui serait porté par un cylindre qui aurait un axe oblique par rapport à l'axe de courbure de la vitre, et un rayon supérieur au rayon de courbure de la vitre. Le mécanisme de la figure 29 est alors organisé comme celui de la figure 26, mais avec le centre O situé sur l'axe YY de la trajectoire 60 telle qu'approximée par un cercle, et non plus sur l'axe XX de courbure de la vitre 28.

En outre, en position de référence, l'axe de parallélisme E se trouve décalé en dehors du plan des axes principaux de façon que le plan des axes (L, E) soit décalé angulairement dans le sens du décalage de XX par rapport à YY.

A titre de variante par rapport à l'exemple de la figure 26, la glissière guidant l'axe E est portée par la manivelle 3 et le tenon s'engageant dans cette glissière est fixé à la vitre 28.

Dans l'exemple de la figure 29, on retrouve la propriété selon laquelle, en position de référence, le plan principal (passant par les axes B et C) est perpendiculaire au plan de la trajectoire 60, considérée circulaire.

On a pu voir ainsi tout au long de la description que l'invention se prête à un grand nombre d'applications très variées dans lesquelles elle permet de remplacer des guidages à glissière par des guidages au moins semi-articulés.

Bien entendu, l'invention n'est pas limitée aux exemples décrits et représentés, et de nombreux aménagements peuvent être apportés à ces exemples sans sortir du cadre de l'invention.

En particulier, dans l'exemple de la figure 1, les moyens de guidage de l'axe C peuvent être remplacés par une glissière fixée à la pièce porteuse et éventuellement profilée pour étendre la trajectoire utile du point mené M.

Dans les exemples des figures 9 à 11, la glissière 18 ou 21 peut être ouverte du côté de l'axe B, et ainsi ne plus constituer qu'un profil de came contre lequel le téton 17 ou respectivement la came 19 est maintenu en appui par un ressort de traction accroché à la manivelle 3 pour solliciter cette dernière en direction dudit profil de came.

Les systèmes correcteurs de trajectoire des figures 8 à 11 sont applicables dans leur principe aux systèmes sphériques des figures 1 à 3.

Concernant l'exemple des figures 12 et 13, le parallélogramme d'amplification peut être réalisé avec la manivelle 26 ou lieu d'être réalisé avec la manivelle 3. En prenant l'exemple de la figure 12, pour réaliser la même trajectoire de point mené M par rapport à la pièce porteuse 1, il faudrait étendre la manivelle 26 jusqu'à l'axe C, et réaliser un parallélogramme déformable avec les pièces 2 et 24, la pièce 26, et une biellette reliant les pièces 24 et 2, cette biellette étant articulée à la pièce 24 au point M1 ou en un autre point et pouvant être prolongée jusqu'à un axe E pour y être articulée à une biellette de parallélisme raccordée à l'axe F de façon analogue à la figure 20.

De même, relativement à la figure 16, la biellette 32 peut être remplacée par une biellette parallèle et de même longueur que la manivelle 4, et articulée d'une part à la pièce porteuse 1 et d'autre part en un même axe à la biellette 29 et à une biellette (remplaçant la biellette 31) articulée d'autre part à l'axe C et formant un parallélogramme déformable avec la pièce 2, la biellette 29 et la pièce menée 28.

Dans les exemples des figures 19 à 23, les moyens pour guider l'axe matérialisé C ou C1 ou C2 peuvent consister en une façon profilée solidaire de la pièce porteuse 1. En outre, la biellette de parallélisme 37 ou 38 peut être remplacée par une glissière dans laquelle est engagé l'axe E ou E1, qui est fixee à la pièce menée 28 et a un profil en similitude avec celui de la glissière de la pièce porteuse.

D'une façon générale, les relations methématiques indiquées permettant de déterminer les configurations les plus performantes. Toutefois, des configurations voisines ne vérifiant pas exactement lesdites relations fournissent des résultats moins bons mais utilisables dans bien des cas, de sorte que l'invention ne saurait être limitée à des mécanismes vérifiant strictement les relations ou les constructions indiquées.

Lorsque l'angle U est égal à 90°, on obtient la plus grande précision possible sur la circularité ou la rectinéarité de la trajectoire TU. Lorsque U s'écarte de 90°, la circularité ou la rectilinéarité est moins bonne mais la trajectoire TU s'allonge, ce qui est utile dans certaines réalisations.

Lorsque l'axe C est guidé par une glissière, le profil de celle-ci peut être étudié pour accuser la courbure de la fin de la trajectoire TU. Un tel résultat est intéressant quand on souhaite terminer un déplacement le long de la trajectoire TU par un court déplacement coudé par rapport à la trajectoire TU.

Dans chaque guidage téton-glissière, il est possible d'intervertir le téton et la glissière relativement aux éléments qui les portent, et de trouver un profil de glissière tel que le guidage mutuel des éléments en question soit inchangé.

**Revendications**

1. Mécanisme de guidage comprenant une pièce porteuse, une pièce mobile (2) à laquelle est lié géométriquement un point mené (M), en vue de guider le point mené (M) par rapport à la pièce porteuse selon une trajectoire utile sensiblement en segment de cercle dont le centre (0) est à distance finie ou infinie, et des moyens (3, 4, 11) pour guider la pièce mobile (2) de façon qu'un premier (B) et un second (C) axes principaux géométriquement fixes par rapport à la pièce mobile (2) suivent par rapport à la pièce porteuse (1) un premier cône (Cb) à base sensiblement circulaire et respectivement un second cône (Cc) ayant tous deux pour sommet le centre précité (0), caractérisé en ce que, dans une position de référence, un plan principal (PP) portant les axes principaux (B, C) passe également par l'axe (A) du premier cône (Cb) et forme avec le plan normal au second cône (Cc) et passant par le second axe principal (C) un angle U orienté du plan principal (PP) vers le plan normal et sensiblement compris entre 60 et 120°, et en ce que l'angle (x) entre un axe mené (L) joignant le centre (0) au point mené (M) et le second axe principal (C) vérifie sensiblement la relation (1):

$$\sin 2x = 2\,\frac{\sin h \cdot \sin (h+r)}{\sin r} \cdot \frac{\sin (U - V)}{\sin U}$$

dans laquelle, quand le centre (0) est rejeté à l'infini, $h \neq r$ et $V \neq 0$, et dans laquelle:

r désigne l'angle au sommet du premier cône (Cb);
h désigne l'angle entre les deux axes principaux; et
V désigne l'angle entre le plan principal (PP) et un plan passant par le second axe principal (C) et par le point mené (M), cet angle étant orienté du plan principal (PP) vers le plan passant par le second axe principal (C) et par le point mené.

2. Mécanisme conforme à la revendication 1, caractérisé en ce que les moyens pour guider la pièce mobile (2) comprennent, pour le guidage du second axe principal (C), un organe profilé (11) et des moyens (12) pour suivre le profil de l'organe profilé (11).

3. Mécanisme conforme à la revendication 2, caractérisé en ce que le profil est conçu pour donner au second axe principal (C) une trajectoire qui s'écarte d'un cône de révolution idéal (Cc) dans le sens de l'agrandissement de la trajectoire utile (TU) du point mené (M) ou au contraire dans un sens accusant la courbure aux extrémités de la trajectoire utile.

4. Mécanisme conforme à l'une des revendications 1 à 3, caractérisé en ce qu'il comprend des moyens (13 à 19, 21 à 23) sensibles à la position de l'un des axes principaux (B) pour corriger la position de l'un des axe (A, D) du mécanisme dans le sens de l'agrandissement de la trajectoire utile (TU) du point mené (M) ou au contraire dans un sens accusant la courbure aux extrémités de T.U.

5. Mécanisme conforme à l'une des revendications 1 à 4, caractérisé en ce que la pièce mobile (2) est associée à un dispositif mené (5, 8, 28) de façon qu'un axe du dispositif mené coïncide sensiblement avec l'axe mené (L).

6. Mécanisme selon l'une des revendications 1 à 5, caractérisé en ce que le centre (0) est à distance finie.

7. Mécanisme conforme à la revendication 6, caractérisé en ce que l'angle (V) entre le plan principal (PP) et le plan passant par le second axe principal (C) et par le point mené (M) est sensiblement nul.

8. Mécanisme conforme à la revendication 7, caractérisé en ce que l'angle au sommet (r) du premier cône (Cc) et l'angle (h) entre les deux axes principaux (B, C) vérifient sensiblement la relation:

$$2 \sin^2 r \sin^2 x - \sin h\,[\sin h - \sin r \cos(h+r)] = 0.$$

9. Mécanisme conforme à l'une des revendications 1 à 5, où le centre (0) est rejeté à l'infini, de sorte que les cônes (Cb, Cc) sont des cylindres et que la relation (1) se simplifie de la façon suivante:

$$x = \frac{h}{r}\,(h+r)\,\frac{\sin (U - V)}{\sin U}$$

dans laquelle chaque angle entre deux axes passant par le centre (0) est devenu la distance entre ces deux axes, caractérisé en ce que l'angle V a sensiblement la valeur

$$V = -\,\mathrm{Arc\ tg}\Big[\Big(\frac{h}{r} - 1\Big)\,\frac{R}{h+r}\Big]$$

dans laquelle R est le rayon de courbure de la trajectoire (Cc) du second axe principal (C).

10. Mécanisme conforme à l'une des revendications 1 à 5, où le centre (0) est rejeté à l'infini, de sorte que les cônes (Cb, Cc) sont des cylindres et que la relation (1) se simplifie de la façon suivante:

$$x = \frac{h}{r}\,(h+r)\,\frac{\sin (U - V)}{\sin U}$$

dans laquelle chaque angle entre deux axes passant par le centre (0) est devenu la distance entre ces deux axes, caractérisé en ce que les moyens pour guider la pièce mobile (2) comprennent au moins une pièce intermédiaire (24), des moyens (3, 26) pour guider la pièce intermédiaire (24) de façon qu'un premier et un second axe principaux intermédiaires (B1, C1) liés à cette pièce suivent des trajectoires semblables à celles voulues pour les axes principaux (B, C), des moyens (3) pour coupler l'un des axes principaux (B) de la pièce mobile (2) avec l'axe principal intermédiaire (B1) correspondant de la pièce intermédiaire (24) de façon que ces deux axes (B, B1) aient des vitesses angulaires égales le long de leurs trajectoires respectives, ces moyens de couplage (3) faisant partie d'une liaison du type à parallélogramme déformable (3, 24, 27, 2) entre la pièce intermédiaire (24) et la pièce mobile (2).

11. Mécanisme conforme à la revendication 10, caractérisé en ce que la liaison du type à parallélogramme déformable comprend deux parallélogrammes ayant un axe commun (B) dont partent deux bras (2, 3) qui sur une partie de leur longueur sont communes aux deux parallélogrammes.

12. Mécanisme selon l'une des revendications 1 à 5, où le centre (O) est rejeté à l'infini, de sorte que les cônes (Cb, Cc) sont des cylindres et que la relation (1) se simplifie de la façon suivante:

$$x = \frac{h}{r}(h+r)\frac{\sin(U-V)}{\sin U}$$

dans laquelle chaque angle entre deux axes passant par le centre (O) est devenu la distance entre ces deux axes, caractérisé en ce que les moyens pour guider l'un des axes principaux (B) selon un cylindre (Cb) comprennent une manivelle (3) articulée à la pièce porteuse (1), et en ce que le mécanisme comprend une liaison à parallélogramme déformable entre ledit axe principal (B), un axe passant par le point mené (M), une articulation auxiliaire (B') et un axe passant par un point mené secondaire (M'), et des moyens pour guider l'articulation auxiliaire (B') selon une trajectoire identique mais décalée par rapport à celle dudit axe principal (B), cette liaison à parallélogramme déformable comprenant une pièce menée (28) articulée aux axes passant respectivement par le point mené (M) et par le point mené secondaire (M').

13. Mécanisme selon la revendication 12, caractérisé en ce que le mécanisme comprend une barre d'accouplement médiane (31) articulée à la pièce mobile (2) selon le premier axe principal (B) et portant une série d'articulations auxiliaires (B'), et reliée par deux séries de biellettes (32, 29) respectivement à une barre d'accouplement extrême porteuse (1) portant fixement l'axe (A) de la trajectoire suivie par le premier axe principal (B) et à une barre d'accouplement extrême menée (28) portant rigidement le point mené (M) et une série de points menés secondaires (M'), les trois barres d'accouplement (1, 31, 28) étant parallèles entre elles et les biellettes (32, 29) parallèles entre elles dans chaque série de biellettes.

14. Mécanisme à usage de grille rétractable selon la revendication 13, caractérisé en ce que les barres d'accouplement (1, 31, 28, 28') sont dirigées sensiblement perpendiculairement à la trajectoire utile (TU).

15. Combinaison d'au moins deux mécanismes selon la revendication 13 ou 14, caractérisée en ce que la barre menée (28) de l'un des mécanismes (SI) constitue la barre porteuse de l'autre mécanisme (SII), les deux séries de biellettes articulées à la barre commune (28) précitée comprenant au moins une biellette commune articulée à la barre commune (28) et aux deux barres intermédiaires (31), les trois axes d'articulation (B', M', B'') de la biellette commune étant sensiblement coplanaires.

16. Combinaison d'au moins deux mécanismes selon la revendication 13 ou 14, caractérisée en ce que l'une des barres extrêmes (28 ou 1') de l'un des mécanismes (SI ou SII) constitue également la barre extrême homologue de l'autre mécanisme (SII ou SIII), et en ce que les deux séries de biellettes (29 ou 32) articulées à la barre commune précitée comprennent au moins une biellette commune articulée à la barre commune et aux deux barres intermédiaires (31), les trois axes d'articulation (B, M, B' ou B', M, B, ou B', M', B') de la biellette commune étant sensiblement coplanaires.

17. Mécanisme conforme à la revendication 7, caractérisé en ce que les moyens pour guider le premier axe principal (B) comprennent une manivelle (3) articulée à la pièce mobile (2) selon ledit axe (B) et à la pièce porteuse (1) selon l'axe (A) du cône (Cb) associé audit axe (B), en ce que le mécanisme comprend des moyens (37, 41) pour guider un axe de parallélisme (E) lié à la manivelle (3) et passant par le centre (O), selon un troidième cône (Ce) d'axe (F) passant par le centre (O) et lié à une pièce menée (28) articulée à la pièce mobile (2) selon l'axe mené (L), en ce que l'axe de parallélisme (E) est sensiblement dans le plan du premier axe principal (B) et de l'axe (A) du cône (Cb) qui lui est associé et fait avec ce dernier axe (A) un angle y vérifiant sensiblement la relation:

$$\sin 2y = \frac{2\sin(y-r)}{\sin(x-h)}\sin(x+y-h-r)$$

et en ce que, en position de référence, le plan portant l'axe de parallélisme (E) et l'axe (F) du troisième cône (Ce) fait avec le plan passant par le premier axe principal (B) et l'axe de parallélisme (E) un angle sensiblement égal à l'angle (U) entre le plan principal (PP) et le plan passant par le second axe principal (C) et par l'axe (D) du second cône (Cc).

18. Mécanisme conforme à la revendication 17, caractérisé en ce qu'en position de référence, le plan principal (PP) fait sensiblement le même angle (W) avec le plan portant le point mené (M) et l'axe (F) du troisième cône (Ce) qu'avec le plan passant par les axes (A, D) des deux cônes (Cb, Cc) associés aux deux axes principaux (B, C).

19. Mécanisme conforme à l'une des revendications 17 ou 18 à usage de lève-vitre pour automobile, caractérisé en ce que la pièce menée est une vitre (28) cintrée de façon sensiblement cylindrique, en ce que le centre (O) est sensiblement porté par l'axe (XX, YY) de la trajectoire considérée sensiblement circulaire désirée pour le point mené (M), et en ce que, en position de référence, le plan principal est sensiblement perpendiculaire au plan de ladite trajectoire considérée sensiblement circulaire.

20. Mécanisme conforme à l'une des revendications 1 à 5, où le centre (O) est rejeté à l'infini, de sorte que les cônes (Cb, Cc) sont des cylindres et que la relation (1) se simplifie de la façon suivante:

$$x = \frac{h}{r}(h+r)\frac{\sin(U-V)}{\sin U}$$

dans laquelle chaque angle entre deux axes passant par le centre (O) est devenu la distance entre ces deux axes, caractérisé en ce que les moyens pour guider l'un des axes principaux (B) selon un cylindre (Cb) comprennent une manivelle (3) articulée à la pièce porteuse (1), en ce que a pièce mobile (2) est articulée à une pièce (3, 27) qui est couplée en vitesse angulaire à la manivelle (3) et dont un axe (E, E1) est guidé par rapport à une pièce menée (28) selon une trajectoire cylindrique (Ce) à base semblable à celle du second cylindre (Cc), en ce que l'arrangement est sensiblement tel que le vecteur ($\overrightarrow{EB}$, $\overrightarrow{E1N}$) ayant pour origine l'axe de parallélisme (E, E1) et pour extrémité l'axe d'articulation (B, N) entre la pièce mobile (2) et la pièce (3, 27) couplée à la manivelle (3), et le vecteur ($\overrightarrow{BM}$, $\overrightarrow{NM}$) ayant pour origine l'extrémité du précédent et pour extrémité le point mené (M) sont respectivement égaux, à un même facteur complexe près, au vecteur ($\overrightarrow{BA}$) ayant pour origine l'axe principal (B) associé à la manivelle (3) et pour extrémité l'axe (A) de sa trajectoire (Cb) et au vecteur ($\overrightarrow{CB}$) ayant pour origine ledit autre axe principal (C) et pour extrémité l'axe principal (B) associé à la manivelle (3), et en ce que l'axe de parallélisme (E) est guidé relativement à la pièce menée (28) selon une trajectoire (Ce) se déduisant sensiblement par similitude ayant pour rapport le facteur complexe précité, de la trajectoire (Cc, Cr) selon laquelle est guidé ledit autre axe principal (C).

21. Mécanisme conforme à la revendication 20, caractérisé en ce que le facteur complexe est sensiblement égal à celui par lequel il faut multiplier un vecteur ($\overrightarrow{CB}$) ayant pour extrémité l'axe principal (B) associé à la manivelle (3) et pour origine l'autre axe principal (C) pour obtenir un vecteur ($\overrightarrow{BM}$) ayant pour extrémité le point mené (M) et pour origine l'axe principal (B) associé à la manivelle (3), et en ce que la pièce couplée en vitesse angulaire avec la manivelle est portée rigidement par la manivelle (3).

22. Mécanisme conforme à la revendication 21, caractérisé en ce que la pièce porteuse (1) et la pièce menée (28) sont sensiblement identiques, et en ce que la manivelle (3) et la pièce mobile (2) sont sensiblement identiques, l'articulation entre la pièce porteuse et la manivelle étant homologue de l'articulation entre la pièce menée (28) et la pièce mobile (2).

23. Mécanisme conforme à la revendication 20, caractérisé en ce que la pièce (27) couplée angulairement avec la manivelle (3) fait partie avec cette dernière d'une liaison à parallélogramme déformable dont deux autres pièces couplées en vitesse angulaire sont constituées pàr la pièce mobile (2) et une pièce intermédiaire (24) dont deux axes principaux intermédiaires (B1, C1) sont guidés par rapport à la pièce porteuse (1) selon des trajectoires cylindriques, et en ce que la pièce (27) couplée angulairement avec la manivelle (3) est articulée à la pièce intermédiaire (24) en un point mené intermédiaire (M1) défini par rapport aux axes principaux intermédiaires (B1, C1) comme l'est le point mené (M) par rapport aux axes principaux (B, C).

24. Application du mécanisme de la revendication 23 à la réalisation d'un bras articulé, dans laquelle la liaison à parallélogramme déformable comprend deux parallélogrammes allongés de façon que les côtés longs de l'un des parallélogrammes soient couplés angulairement aux côtés courts 'e l'autre, la pièce porteuse (1) étant destinée à être assujettie à un support tandis que la pièce menée (28) porte un dispositif déplaçable de façon rectiligne en restant parallèle à lui-même quel que soit l'état de déploiement du bras dans une certaine plage.

25. Application du mécanisme selon l'une des revendications 20 à 23 à la réalisation d'une table élévatrice, la pièce porteuse (1) constituant un socle et la pièce menée (28) un tablier de la table.

26. Machine à outil tournant comprenant d'une part un mécanisme conforme à la revendication 25, un plateau (52) monté en rotation relativement au tablier (28), et d'autre part un mécanisme analogue formant un angle de 90° avec le premier et dont la pièce menée (28) porte rotativement un outil tournant (52') surplombant le plateau (52) tandis que l'axe de l'outil tournant est sensiblement dans la direction de déplacement de la pièce menée (28) du mécanisme analogue et se trouve sensiblement radial par rapport à l'axe du plateau (52).

**Patentansprüche**

1. Führungsmechanismus mit einem Trägerteil, einem beweglichen Teil (2), an welches ein geführter Punkt (M) geometrisch angeschlossen ist, um diesen geführten Punkt (M) bezüglich des Trägerteils auf einer nutzbaren Bahn zu führen, die im wesentlichen kreissegmentförmig ist und deren Mittelpunkt (O) sich in endlicher oder unendlicher Entfernung befindet, und Mitteln (3, 4, 11) zur Führung des beweglichen Teils (2) in solcher Weise, dass eine erste (B) und eine zweite (C) Hauptachse, die geometrisch bezüglich des beweglichen Teils (2) festliegen, in bezug auf das Trägerteil (1) einem ersten Kegel (Cb) mit im wesentlichen kreisförmiger Basis bzw. einem zweiten Kegel (Cc) folgen, wobei der Scheitel beider Kegel in dem genannten Mittelpunkt (O) liegt, dadurch gekennzeichnet, dass in einer Bezugsstellung eine Hauptebene (PP), welche die Hauptachsen (B, C) enthält, gleichfalls durch die Achse (A) des ersten Kegels (Cb) verläuft und mit der zu dem zweiten Kegel (Cc) senkrecht verlaufenden sowie durch die zweite Hauptachse (C) verlaufenden Ebene einen Winkel U bildet, der von der Hauptebene (PP) zu der senkrechten Ebene orientiert ist und im wesentlichen zwischen 60 und 120° liegt, und dass der Winkel (x) zwischen einer den Mittelpunkt (O) mit dem geführten Punkt (M) verbindenden geführten Achse (L) und der zweiten Hauptachse (C) im wesentlichen die Beziehung (1) erfüllt:

$$\sin 2x = 2\,\frac{\sin h \cdot \sin(h+r)}{\sin r}\cdot\frac{\sin(U-V)}{\sin U}$$

worin, wenn der Mittelpunkt (0) im Unendlichen liegt, h ≠ r und V ≠ 0, und worin:

r den Scheitelwinkel des ersten Kegels (Cb) bedeutet;

h den Winkel zwischen den beiden Hauptachsen bedeutet; und

V denWinkel zwischen der Hauptebene (PP) und einer Ebene bezeichnet, welche durch die zweite Hauptachse (C) und den geführten Punkt (M) verläuft, wobei dieser Winkel von der Hauptebene (PP) zu der Ebene orientiert ist, welche durch die zweite Hauptachse (C) und den geführten Punkt verläuft.

2. Mechanismus nach Anspruch 1, dadurch gekennzeichnet, dass die Mittel zur Führung des beweglichen Teils (2) für die Führung der zweiten Hauptachse (C) ein profiliertes Organ (11) und Mittel (12) enthalten, um dem Profil des profilierten Organs (11) zu folgen.

3. Mechanismus nach Anspruch 2, dadurch gekennzeichnet, dass das Profil so ausgelegt ist, dass es der zweiten Hauptachse (C) eine Bewegungsbahn aufgibt, die von einem idealen Umdrehungskegel (Cc) im Sinne einer Vergrösserung der nutzbaren Bahn (TU) des geführten Punktes (M) oder aber im Sinne einer Verstärkung der Krümmung an den Enden der nutzbaren Bewegungsbahn abweicht.

4. Mechanismus nach einem der Ansprüche 1 bis 3, dadurch gekennzeichnet, dass er Mittel (13 bis 19, 21 bis 23) umfasst, welche auf die Stellung einer der Hauptachsen (B) ansprechen, um die Lage einer der Achsen (A, D) des Mechanismus im Sinne einer Vergrösserung der nutzbaren Bewegungsbahn (TU) des geführten Punktes (M) oder aber im Sinne einer Verstärkung der Krümmung an den Enden von T.U. zu korrigieren.

5. Mechanismus nach einem der Ansprüche 1 bis 4, dadurch gekennzeichnet, dass das bewegliche Teil (2) einer geführten Vorrichtung (5, 8, 28) in solcher Weise zugeordnet ist, dass eine Achse der geführten Vorrichtung im wesentlichen mit der geführten Achse (L) übereinstimmt.

6. Mechanismus nach einem der Ansprüche 1 bis 5, dadurch gekennzeichnet, dass der Mittelpunkt (0) sich in endlicher Entfernung befindet.

7. Mechanismus nach Anspruch 6, dadurch gekennzeichnet, dass der Winkel (V) zwischen der Hauptebene (PP) und der durch die zweite Hauptachse (C) sowie durch den geführten Punkt (M) verlaufenden Ebene im wesentlichen gleich Null ist.

8. Mechanismus nach Anspruch 7, dadurch gekennzeichnet, dass der Scheitelwinkel (r) des ersten Kegels (Cc) und der Winkel (h) zwischen den zweiden Hauptachsen (B, C) im wesentlichen folgende Beziehung erfüllen:

$$2 \sin^2 r \sin^2 x - \sin h\,[\sin h - \sin r \cos(h+r)] = 0.$$

9. Mechanismus nach einem der Ansprüche 1 bis 5, bei welchem der Mittelpunkt (0) im Unendlichen liegt, so dass die Kegel (Cb, Cc) Zylinder sind und die Beziehung (1) folgendermassen vereinfacht ist:

$$x = \frac{h}{r}(h+r)\frac{\sin(U-V)}{\sin U}$$

worin jeder Winkel zwischen zwei durch den Mittelpunkt (0) verlaufenden Achsen zu dem Abstand zwischen diesen beiden Achsen geworden ist, dadurch gekennzeichnet, dass der Winkel V im wesentlichen folgenden Wert aufweist:

$$V = -\operatorname{Arc\,tg}\left[\left(\frac{h}{r} - 1\right)\frac{R}{h+r}\right]$$

worin R der Krümmungsradius der Bewegungsbahn (Cc) der zweiten Hauptachse (C) ist.

10. Mechanismus nach einem der Ansprüche 1 bis 5, bei welchem der Mittelpunkt (0) im Unendlichen liegt, so dass die Kegel (Cb, Cc) Zylinder sind und die Beziehung (1) folgendermassen vereinfacht ist:

$$x = \frac{h}{r}(h+r)\frac{\sin(U-V)}{\sin U}$$

worin jeder Winkel zwischen zwei durch den Mittelpunkt (0) verlaufenden Achsen zu dem Abstand zwischen diesen zwei Achsen geworden ist, dadurch gekennzeichnet, dass die Mittel zur Führung des beweglichen Teils (2) wenigstens ein Zwischenteil (24), Mittel (3, 26) zur Führung des Zwischenteils (24) in solcher Weise, dass eine erste und eine zweite Haupt-Zwischenachse (B1, C1), die mit diesem Teil verbunden sind, Bahnen folgen, welche denjenigen ähnlich sind, die für die Hauptachsen (B, C) gewünscht werden, und Mittel (3) umfassen, um eine der Hauptachsen (B) des beweglichen Teils (2) mit der entsprechenden Haupt-Zwischenachse (B1) des Zwischenteils (24) in solcher Weise zu koppeln, dass diese zwei Achsen (B, B1) gleiche Winkelgeschwindigkeiten entlang ihrer jeweiligen Bewegungsbahn aufweisen, wobei diese Kopplungsmittel (3) Bestandteil einer Verbindung vom Typ eines deformierbaren Parallelogramms (3, 24, 27, 2) zwischen dem Zwischenteil (24) und dem beweglichen Teil (2) sind.

11. Mechanismus nach Anspruch 10, dadurch gekennzeichnet, dass die Verbindung vom Typ eines deformierbaren Parallelogramms zwei Parallelogramme enthält, die eine gemeinsame Achse (B) aufweisen, wovon zwei Arme (2, 3) ausgehen, die auf einem Teil ihrer Länge den beiden Parallelogrammen gemeinsam sind.

12. Mechanismus nach einem der Ansprüche 1 bis 5, bei welchem der Mittelpunkt (0) im Unendlichen liegt, so dass die Kegel (Cb, Cc) Zylinder sind und die Beziehung (1) folgendermassen vereinfacht ist:

$$x = \frac{h}{r}(h+r)\frac{\sin(U-V)}{\sin U}$$

worin jeder Winkel zwischen zwei durch den Mittelpunkt (0) verlaufenden Achsen zu dem Abstand zwischen diesen zwei Achsen geworden ist, dadurch gekennzeichnet, dass die Mittel zur Führung einer der Hauptachsen (B) entlang einem Zylinder (Cb) eine Kurbel (3) umfassen, die an dem Trägerteil (1) angelenkt ist, und dass der Mechanismus eine Verbindung mit einem deformierbaren Parallelogramm zwischen der genannten Hauptachse (B), einer durch den geführten Punkt (M) verlaufenden Achse, einem Hilfsgelenk (B') und einer durch einen geführten sekundären Punkt (M') verlaufenden Achse sowie Mittel umfasst, um das Hilfsgelenk (B') auf einer Bahn zu führen, die vollkommen mit der der Hauptachse (B) übereinstimmt, jedoch gegenüber dieser versetzt ist, wobei diese Verbindung mit deformierbarem Parallelogramm ein geführtes Teil (28) umfasst, welches an den Achsen angelenkt ist, die durch den geführten Punkt (M) bzw. den sekundären geführten Punkt (M') verlaufen.

13. Mechanismus nach Anspruch 12, dadurch gekennzeichnet, dass der Mechanismus eine mittige Koppelstange (13) umfasst, welche an dem beweglichen Teil (2) um die erste Hauptachse (B) angelenkt ist und eine Reihe von Hilfsgelenken (B') aufweist sowie über je eine von zwei Reihen von Pleueln (32, 29) an eine endseitige tragende Koppelstange (1) angeschlossen ist, welche die Achse (A) der Bahn, welcher die erste Hauptachse (B) folgt, fest trägt, bzw. an eine zweite endseitige geführte Koppelstange (28) angeschlossen ist, welche den geführten Punkt (M) und eine Reihe von sekundären geführten Punkten (M') starr trägt, wobei die drei Koppelstangen (1, 31, 28) parallel zueinander sind und die Pleuel (32, 29) untereinander in jeder Reihe von Pleueln parallel sind.

14. Mechanismus zur Verwendung bei einem einziehbaren Gitter, nach Anspruch 13, dadurch gekennzeichnet, dass die Koppelstangen (1, 31, 28, 28') im wesentlichen senkrecht zur nutzbaren Bahn (TU) gerichtet sind.

15. Kombination aus wenigstens zwei Mechanismen nach Anspruch 13 oder 14, dadurch gekennzeichnet, dass die geführte Stange (28) eines der Mechanismen (SI) die Tragstange des anderen Mechanismus (SII) bildet, wobei die zwei Reihen von an der genannten gemeinsamen Stange (28) angelenkten Pleueln wenigstens ein gemeinsames Pleuel enthalten, das an der gemeinsamen Stange (28) und an den zwei Zwischenstangen (31) angelenkt ist, wobei die drei Anlenkachsen (B', M', B'') des gemeinsamen Pleuels im wesentlichen koplanar sind.

16. Kombination aus wenigstens zwei Mechanismen nach den Ansprüchen 13 oder 14, dadurch gekennzeichnet, dass eine der endseitigen Stangen (28 oder 1') eines der Mechanismen (SI oder SII) gleichfalls die entsprechende endseitige Stange des anderen Mechanismus (SII oder SIII) bildet, dass die zwei Reihen von Pleueln (29 oder 32), die an der genannten gemeinsamen Stange angelenkt sind, wenigstens ein gemeinsames Pleuel enthalten, welches an der gemeinsamen Stange und an den zwei Zwischenstangen (31) angelenkt ist, wobei die drei Anlenkachsen (B, M, B' oder B', M, B, oder B', M', B') des gemeinsamen Pleuels im wesentlichen koplanar sind.

17. Mechanismus nach Anspruch 7, dadurch gekennzeichnet, dass die Mittel zur Führung der ersten Hauptachse (B) eine Kurbel (3) umfassen, die an den beweglichen Teil (2) um die genannte Achse (B) und an dem beweglichen Teil (1) um die Achse (A) des der genannten Achse (B) zugeordneten Kegels (C$\underline{b}$) angelenkt ist, dass der Mechanismus Mittel (37, 41) umfasst, um eine mit der Kurbel (3) verknüpfte und durch den Mittelpunkt (O) verlaufende Parallelitätsachse (E) entlang einem drittel Kegel (C$\underline{e}$) mit der Achse (F) zu führen, welche durch den Mittelpunkt (O) verläuft und an ein geführtes Teil (28) angeschlossen ist, welches an dem beweglichen Teil (2) um die geführte Achse (L) angelenkt ist, dass die Parallelitätsachse (E) im wesentlichen in der Ebene der ersten Hauptachse (B) und der ihr zugeordneten Achse (A) des Kegels (C$\underline{b}$) liegt und mit der letztgenannten Achse (A) einen Winkel y bildet, der im wesentlichen folgende Beziehung erfüllt:

$$\sin 2y = \frac{2 \sin (y-r)}{\sin (x-h)} \sin (x+y-h-r)$$

und dass in der Bezugsstellung die Ebene, welche die Parallelitätsachse (E) und die Achse (F) des dritten Kegels (C$\underline{e}$) trägt, mit der Ebene, welche durch die erste Hauptachse (B) und die Parallelitätsachse (E) verläuft, einen Winkel bildet, der im wesentlichen gleich dem Winkel (U) zwischen der Hauptebene (PP) und der Ebene ist, welche durch die zweite Hauptachse (C) und die Achse (B) des zweiten Kegels (C$\underline{c}$) verläuft.

18. Mechanismus nach Anspruch 17, dadurch gekennzeichnet, dass in der Bezugsstellung die Hauptebene (PP) im wesentlichen denselben Winkel (W) mit der den geführten Punkt (M) und die Achse (F) des dritten Kegels (C$\underline{e}$) enthaltenden Ebene wie mit der Ebene bildet, welche durch die Achsen (A, D) der zwei Kegel (C$\underline{b}$, C$\underline{c}$) verläuft, die den beiden Hauptachsen (B, C) zugeordnet sind.

19. Mechanismus nach Anspruch 17 oder 18 zur Verwendung als Fensterheber in Kraftfahrzeugen, dadurch gekennzeichnet, dass das geführte Teil eine Scheibe (28) ist, die im wesentlichen zylindrisch gewölbt ist, dass der Mittelpunkt (O) im wesentlichen von der Achse (XX, YY) der für den geführten Punkt (M) betrachteten, im wesentlichen kreisförmigen und angestrebten Bahn getragen wird und dass in der Bewegungsstellung die Hauptebene im wesentlichen senkrecht zur Ebene der genannten betrachteten und im wesentlichen kreisförmigen Bahn verläuft.

20. Mechanismus nach einem der Ansprüche 1 bis 5, bei welchem der Mittelpunkt (O) im Unendlichen liegt, so dass die Kegel (C$\underline{b}$, C$\underline{c}$) Zylinder sind und die Beziehung (1) folgendermassen vereinfacht ist:

$$x = \frac{h}{r} (h+r) \frac{\sin (U - V)}{\sin U}$$

worin jeder Winkel zwischen zwei durch den Mittelpunkt (O) verlaufenden Achsen zu dem Abstand zwischen diesen zwei Achsen geworden ist, dadurch gekennzeichnet, dass die Mittel zur Führung einer der Hauptachsen (B) entlang einem Zylinder (C$\underline{b}$) eine Kurbel (3) umfassen, die an dem Trägerteil (1) angelenkt ist, dass das bewegliche Teil (2) an einem Teil (3, 27) angelenkt ist, welches hinsichtlich der Winkelgeschwindigkeit an die Kurbel (3) angekoppelt ist und wovon eine Achse (E, E1) bezüglich eines geführten Teils (28) auf einer zylindrischen Bahn (C$\underline{e}$) geführt ist, deren Basis derjenigen des zweiten Zylinders (C$\underline{c}$) ähnlich ist, dass die Anordnung im wesentlichen so ausgelegt ist, dass der Vektor $(\overrightarrow{EB}, \overrightarrow{E1N})$, dessen Ursprung die Parallelitätsachse (E, E1) und dessen Ende die Gelenkachse (B, N) zwischen dem beweglichen Teil (2) und dem an die Kurbel (3) angekoppelten Teil (3, 27) ist, und der Vektor $(\overrightarrow{BM}, \overrightarrow{NM})$, dessen Ursprung das Ende des Vorgenannten und dessen Ende der geführte Punkt (M) ist, bis auf den gleichen komplexen Faktor gleich dem Vektor $(\overrightarrow{BA})$, dessen Ursprung die der Kurbel (3) zugeordnete Hauptachse (B) und dessen Ende die Achse (A) ihrer Bahn (Cb) ist, bzw. gleich dem Vektor $(\overrightarrow{CB})$ ist, dessen Ursprung die genannte Hauptachse (C) und dessen Ende die der Kurbel (3) zugeordnete Hauptachse (B) ist, und dass die Parallelitätsachse (E) relativ zu dem geführten Teil (28) auf einer Bahn (Ce) geführt ist, die im wesentlichen durch Ähnlichkeit im Verhältnis des genannten komplexen Faktors von der Bahn (Cc, Cr) abgeleitet ist, auf welcher die genannte andere Hauptachse (C) geführt ist.

21. Mechanismus nach Anspruch 20, dadurch gekennzeichnet, dass der komplexe Faktor im wesentlichen gleich demjenigen ist, mit welchem ein Vektor $(\overrightarrow{CB})$, dessen Ende die der Kurbel (3) zugeordnete Hauptachse (B) und dessen Ursprung die andere Hauptachse (C) ist, multipliziert werden muss, um einen Vektor $(\overrightarrow{BM})$ zu erhalten, dessen Ende der geführte Punkt (M) und dessen Ursprung die der Kurbel (3) zugeordnete Hauptachse (B) ist, und dass das hinsichtlich der Winkelgeschwindigkeit an die Kurbel angekoppelte Teil starr von der Kurbel (3) getragen wird.

22. Mechanismus nach Anspruch 21, dadurch gekennzeichnet, dass das Trägerteil (1) und das geführte Teil (28) im wesentlichen miteinander identisch sind und dass die Kurbel (3) und das bewegliche Teil (2) im wesentlichen miteinander identisch sind, wobei die Gelenkverbindung zwischen dem Trägerteil und der Kurbel der Gelenkverbindung zwischen dem geführten Teil (28) und dem beweglichen Teil (2) entspricht.

23. Mechanismus nach Anspruch 20, dadurch gekennzeichnet, dass das hinsichtlich der Winkelstellung an die Kurbel (3) angekoppelte Teil (27) gemeinsam mit letzterer Bestandteil einer Verbindung nach Art eines deformierbaren Parallelogramms ist, dessen zwei andere, hinsichtlich der Winkelgeschwindigkeit gekoppelte Teile durch das bewegliche Teil (2) und ein Zwischenteil (24) gebildet sind, wovon zwei Haupt-Zwischenachsen (B1, C1) bezüglich des Trägerteils (1) auf zylindrischen Bahnen geführt sind, und dass das hinsichtlich der Winkelstellung an die Kurbel (3) angekoppelte Teil (27) gelenkig an das Zwischenteil (24) in einem geführten Zwischenpunkt (M1) angeschlossen ist, welcher bezüglich der Haupt-Zwischenachsen (B1, C1) wie der geführte Punkt (M) bezüglich der Hauptachsen (B, C) definiert ist.

24. Anwendung des Mechanismus nach Anspruch 23 auf die Verwirklichung eines gelenkigen Armes, wobei die Verbindung nach Art eines deformierbaren Parallelogramms zwei gestreckte Parallelogramme enthält, dergestalt, dass die langen Seiten eines der Parallelogramme hinsichtlich der Winkelstellung an die kurzen Seiten des anderen angekoppelt sind, wobei das Trägerteil (1) dazu bestimmt ist, von einem Träger abhängig zu sein, während das geführte Teil (28) eine Vorrichtung trägt, die geradlinig verschiebbar ist, indem sie zu sich selbst parallel bleibt, unabhängig vom Ausfahrzustand des Armes innerhalb eines bestimmten Bereiches.

25. Anwendung des Mechanismus nach einem der Ansprüche 20 bis 23 auf die Verwirklichung eines Hubtisches, wobei das Trägerteil (1) einen Sockel und das geführte Teil (28) eine Tischplatte bildet.

26. Drehend arbeitende Werkzeugmaschine, die einerseits einen Mechanismus nach Anspruch 25 und eine relativ zur Tischplatte (28) drehbar gelagerte Scheibe (52) sowie andererseits einen analogen Mechanismus enthält, der einen Winkel von 90° mit dem ersten Mechanismus bildet und bei welchem das geführte Teil (28) ein rotierendes Werkzeug (52') drehbar trägt, welches sich senkrecht über der Scheibe (52) befindet, während die Achse des rotierenden Werkzeugs im wesentlichen in der Bewegungsrichtung des geführten Teils (28) des analogen Mechanismus liegt und im wesentlichen radial bezüglich der Achse der Scheibe (52) ausgerichtet ist.

**Claims**

1. Guiding mechanism comprising a carrier member, a movable member (2) with which a driven point (M) is geometrically associated, with a view to guiding the driven point (M) with respect to the carrier member along a useful trajectory substantially in the shape of a circular segment whose center (O) is at a finite or infinite distance, and means (3, 4, 11) for guiding the movable member (2) in such a manner as to ensure that a first main axis (B) and a second main axis (C) which are geometrically fixed with respect to the movable member (2) follow with respect to the carrier member (1) a first cone (Cb) having a substantially circular base and respectively a second cone (Cc), the vertices of said cones being both located at the center (O) aforesaid, characterized in that, in a reference position, a main plane (PP) which carries the main axes (B, C) also passes through the axis (A) of the first cone (Cb) and formes with the plane normal to the second cone (Cc) and passing through the second main axis (C) and angle U oriented from the main plane (PP) towards the normal plane and substantially comprised between 60 and 120°, and that the angle (x) between a driven axis (L) joining the center (O) to the driven point (M) and the second main axis (C) substantially verifies the relation (1):

$$\sin 2x = 2\,\frac{\sin h \cdot \sin (h+r)}{\sin r} \cdot \frac{\sin (U-V)}{\sin U}$$

in which, when the center (O) is rejected to infinity, $h \neq r$ and $V \neq 0$, and in which:

r designates the angle at the vertex of the first cone (Cb);

h designates the angle between the two main axes; and

V designates the angle between the main plane (PP) and a plane which passes through the second main axis (C) and through the driven point (M), this angle being oriented from the main plane (PP) towards the plane which passes through the second main axis (C) and through the driven point.

2. Mechanism in accordance with claim 1, characterized in that the means for guiding the movable member (2) comprise, for guiding the second main axis (C), a profiled element (11) and means (12) for following the profile of the profiled element (11).

3. Mechanism in accordance with claim 2, characterized in that the profile is so designed as to give the second main axis (C) a trajectory which departs from an ideal cone of revolution (Cc) in the direction of extension of the useful trajectory (TU) of the driven point (M) or on the contrary in a direction to render the curvature more pronounced at the ends of the useful trajectory.

4. Mechanism in accordance with one of claims 1 to 3, characterized in that it comprises means (13, to 19, 21 to 23) responsive to the position of one of the main axes (B) for correcting the position of one of the axes (A, D) of the mechanism in the direction of extension of the useful trajectory (TU) of the driven point (M) or on the contrary in a direction to render the curvature more prenonced at the ends of TU.

5. Mechanism in accordance with one of claims 1 to 4, characterized in that the movable member (2) is associated with a driven device (5, 8, 28) so as to ensure that an axis of the driven device coincides substantially with the driven axis (L).

6. Mechanism in accordance with one of claims 1 to 5, characterized in that the center (O) is at a finite distance.

7. Mechanism in accordance with claim 6, characterized in that the angle (V) between the main plane (PP) and the plane which passes through the second main axis (C) and through the driven point (M) is substantially zero.

8. Mechanism in accordance with claim 7, characterized in that the angle at the vertex (r) of the first cone (Cc) and the angle (h) between the two main axes (B, C) substantially verify the relation:

$$2 \sin^2 r \sin^2 x - \sin h [\sin h - \sin r \cos(h+r)] = 0.$$

9. Mechanism in accordance with one of claims 1 to 5 in which the center (O) is rejected to infinity, with the result that the cones (Cb, Cc) are cylinders and that relation (1) is simplified as follows:

$$x = \frac{h}{r}(h+r)\frac{\sin(U-V)}{\sin U}$$

in which each angle between two axes which pass through the center (O) has become the distance between these two axes, characterized in that the angle V has substantially the value

$$V = -\operatorname{arc\,tg}[(\frac{h}{r}-1)\frac{R}{h+r}]$$

in which R is the radius of curvature of the trajectory (Cc) of the second main axis (C).

10. Mechanism in accordance with one of claims 1 to 5 in which the center (O) is rejected to infinity, with the result that the cones (Cb, Cc) are cylinders and that the relation (1) is simplified as follows:

$$x = \frac{h}{r}(h+r)\frac{\sin(U-V)}{\sin U}$$

in which each angle between two axes which pass through the center (O) has become the distance between these two axes, characterized in that the means for guiding the movable member (2) comprises at least one intermediate member (24), means (3, 26) for guiding the intermediate member (24) in such a manner as to ensure that a first intermediate main axis and a second intermediate main axis (B1, C1) associated with this member follow trajectories which are similar to those desired for the main axes (B, C), means (3) for coupling one of the main axes (B) of the movable member (2) with the corresponding intermediate main axis (B1) of the intermediate member (24) so as to ensure that these two axes (B, B1) have equal angular velocities along their respective trajectories, these coupling means (3) being such as to form part of a linkage of the deformable parallelogram type (3, 24, 27, 2) between the intermediate member (24) and the movable member (2).

11. Mechanism in accordance with claim 10, characterized in that the linkage of the deformable parallelogram type comprises two parallelograms having a common axis (B) from which extend two arms (2, 3) which are common to the two parallelograms over part of their length.

12. Mechanism in accordance with one of claims 1 to 5 in which the center (O) is rejected to infinity, with the result that the cones (Cb, Cc) are cylinders and that relation (1) is simplified as follows:

$$x = \frac{h}{r}(h+r)\frac{\sin(U-V)}{\sin U}$$

in which each angle between two axes which pass through the center (O) has become the distance between these two axes, characterized in that the means for guiding one of the main axes (B) along a cylinder (Cb) comprise a crank (3) which is pivoted to the carrier member (1) and that the mechanism comprises a deformable parallelogram linkage between said main axis (B), an axis which passes through the driven point (M), an auxiliary articulation (B') and an axis which passes through a secondary driven point (M'), and means for guiding the auxiliary articulation (B') along a trajectory which is identical but displaced with respect to that of said main axis (B), this deformable parallelogram linkage being constituted by a driven member (28) pivoted about the axes which pass respectively through the driven point (M) and through the secondary driven point (M').

13. Mechanism in accordance with claim 12, characterized in that the mechanism comprises a central coupling bar (31) which is pivoted to the movable member (2) on the first main axis (B) and carries a series of auxiliary articulation (B'), and which is connected by two series of link-arms (32, 29) respectively to a carrier end coupling bar (1) for fixedly carrying the axis (A) of the trajectory followed by the first main axis (B) and to a driven end coupling bar (28) for rigidly carrying the driven point (M) and a series of secondary driven points (M'), the three coupling bars (1, 31, 28) being parallel to each other and the link-arms (32, 29) being parallel to each other in each series of link-arms.

14. Mechanism for use as a collapsible gate in accordance with claim 13, characterized in that the coupling bars (1, 31, 28, 28') are directed substantially at right angles to the useful trajectory (TU).

15. Combination of at least two mechanisms in accordance with claim 13 or 14, characterized in that the driven bar (28) of one of the mechanisms (SI) constitutes the carrier bar of the other mechanism (SII), the two series of link-arms pivotally attached to the common bar (28) aforesaid comprising at least one common link-arm pivotally attached to the common bar (28) and to the two intermediate bars (31), the three pivotal axes (B', M', B'') of the common link-arm being substantially coplanar.

16. Combination of at least two mechanisms in accordance with claim 13 or 14, characterized in that one of the end bars (28 or 1') of one of the mechanisms (SI or SII) also constitutes the homologous end bar of the other mechanism (SII or SIII) and that the two series of link-arms (29 or 32) which are pivotally attached to the common bar aforesaid comprise at least one common link-arm pivotally attached to the common bar and to the two intermediate bars (31), the three pivotal axes (B, M, B', or B', M, B, or B', M', B') of the common link-arm being substantially coplanar.

17. Mechanism in accordance with claim 7, characterized in that the means for guiding the first main axis (B) comprises a crank (3) pivoted to the movable member (2) on said axis (B) and to the carrier member (1) on the axis (A) of the cone (Cb) which is associated with said axis (B), that the mechanism comprises means (37, 41) for guiding a parallel alignment axis (E) which is associated with the crank (3) and passes through the center (O), along a third cone (Ce) having an axis (F) passing through the center (O) and associated with a driven member (28) pivoted to the movable member (2) on the driven axis (L), that the axis of parallel alignment (E) is substantially in the plane of the main axis (B) and of the axis (A) of the cone (Cb) which is associated therewith and is inclined to the last-mentioned axis (A) at an angle y which substantially verifies the relation:

$$\sin 2y = \frac{2 \sin (y-r)}{\sin (x-h)} \sin (x+y-h-r)$$

and that, in the reference position, the plane carrying the axis of parallel alignment (E) and the axis (F) of the third cone (Ce) is inclined to the plane passing through the first main axis (B) and the axis of parallel alignment (E) at an angle substantially equal to the angle (U) between the main plane (PP) and the plane passing through the second main axis (C) and through the axis (D) of the second cone (Cc).

18. Mechanism in accordance with claim 17, characterized in that, in the reference position, the main plane (PP) is inclined substantially at the same angle (W) with respect to the plane which carries the driven point (M) and the axis (F) of the third cone (Ce) and with respect to the plane which passes through the axes (A, D) of the two cones (Cb, Cc) associated with the two main axes (B, C).

19. Mechanism in accordance with one of claims 17 or 18 for use as an automobile window-lifter, characterized in that the driven member is a window (28) which is curved in a substantially cylindrical manner, that the center (O) is substantially carried by the axis (XX, YY) of the trajectory considered to be substantially circular as desired for the driven point (M) and that, in the reference position, the main plane is substantially perpendicular to the plane of said trajectory considered to be substantially circular.

20. Mechanism in accordance with one of claims 1 to 5 in which the center (O) is rejected to infinity, with the result that the cones (Cb, Cc) are cylinders and that relation (1) is simplified as follows:

$$x = \frac{h}{r} (h+r) \frac{\sin (U-V)}{\sin U}$$

in which each angle between two axes which pass through the center (O) has become the distance between these two axes, characterized in that the means for guiding one of the main axes (B) along a cylinder (Cb) comprise a crank (3) pivotally attached to the bearing member (1), that the movable member (2) is pivotally attached to a member (3, 27) which is coupled in angular velocity to the crank (3) and one axis (E, E1) of which is guided with respect to a driven member (28) along a cylindrical trajectory (Ce) having a base similar to that of the second cylinder (Cc), that the arrangement is substantially such that the vector ($\overrightarrow{EB}$, $\overrightarrow{E1N}$) whose origin is the axis of parallel alignment (E, E1) and whose end is the axis of articulation (B, N) between the movable member (2) and the member (3, 27) which is coupled with the crank (3), and the vector ($\overrightarrow{BM}$, $\overrightarrow{NM}$) whose origin is the end of the preceding vector and whose end is the driven point (M) are respectfully equal, except for a same compound factor, to the vector ($\overrightarrow{BA}$) whose origin is the main axis (B) associated with the crank (3) and whose end is the axis (A) of its trajectory (Cb) and to the vector ($\overrightarrow{CB}$) whose origin is said other main axis (C) and whose end is the main axis (B) associated with the crank (3), and that the axis of parallel alignment (E) is guided relatively to the driven member (28) along a trajectory (Ce) which is deduced substantially by similitude whose ratio is the compound factor aforesaid from the trajectory (Cc, Cr) along which said other main axis (C) is guided.

21. Mechanism in accordance with claim 20, characterized in that the compound factor is substantially equal to the factor by which it is necessary to multiply a vector ($\overrightarrow{CB}$) whose end is the main axis (B) associated with the crank (3) and whose origin is the other main axis (C) in order to obtain a vector ($\overrightarrow{BM}$) whose end is the driven point (M) and whose origin is the main axis (B) associated with the crank (3), and that the member coupled in angular velocity with the crank is rigidly supported by the crank (3).

22. Mechanism in accordance with claim 21, characterized in that the carrier member (1) and the driven member (28) are substantially identical and that the crank (3) and the movable member (2) are substantially identical, the articulation between the carrier member and the crank being homologous with the articulation between the driven member (28) and the movable member (2).

23. Mechanism in accordance with claim 20, characterized in that the member (27) which is angularly coupled with the crank (3) forms part together with this latter of a deformable parallelogram linkage in which two other members coupled in angular velocity are constituted by the movable member (2) and an intermediate member (24) in which two intermediate main axes (B1, C1) are guided with respect to the carrier member (1) along cylindrical trajectories and that the member (27) which is angularly coupled with the crank (3) is pivoted to the intermediate member (24) at an intermediate driven point (M) defined with respect to the intermediate main axes (B1, C1) as is the case with the driven point (M) with respect to the main axis (B, C).

24. Application of the mechanism of claim 23 to the construction of an articulated arm in which the deformable parallelogram linkage comprises two parallelograms which are elongated in such a manner that the long sides of one of the parallelograms are angularly coupled with the short sides of the other, the carrier member (1) being intended to be secured to a support whilst the driven member (28) carries a device which is capable of rectilinear displacement while remaining parallel to itself irrespective of the state of extension of the arm over a certain range.

25. Application of the mechanism in accordance with one of claims 20 to 23 to the construction of a lifting-table in which the carrier member (1) constitutes a base and the driven member (28) constitutes an apron of the table.

26. Rotary machine-tool comprising on the one hand a mechanism in accordance with claim 25, a turntable (52) rotatably mounted relative to the apron (28) and on the other hand an analogous mechanism which makes an angle of 90° with the first and in which the driven member (28) rotatably supports a rotary tool (52′) located above the turntable (52) whilst the axis of the rotaty tool is substantially in the direction of displacement of the driven member (28) of the analogous mechanism and is in a substantially radial location with respect to the axis of the turntable (52).

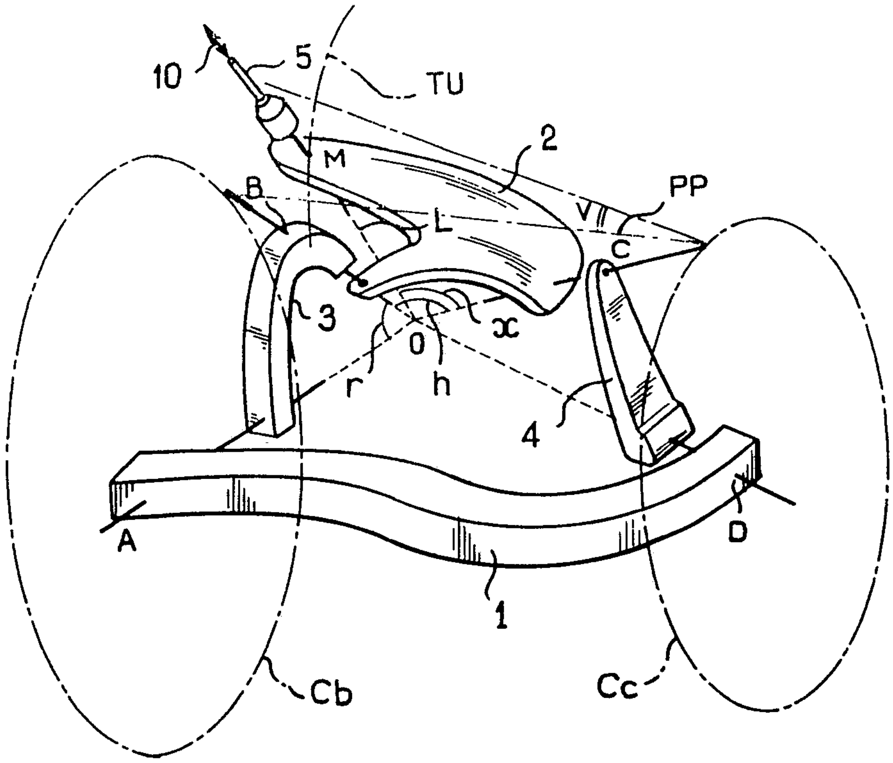


FIG_1

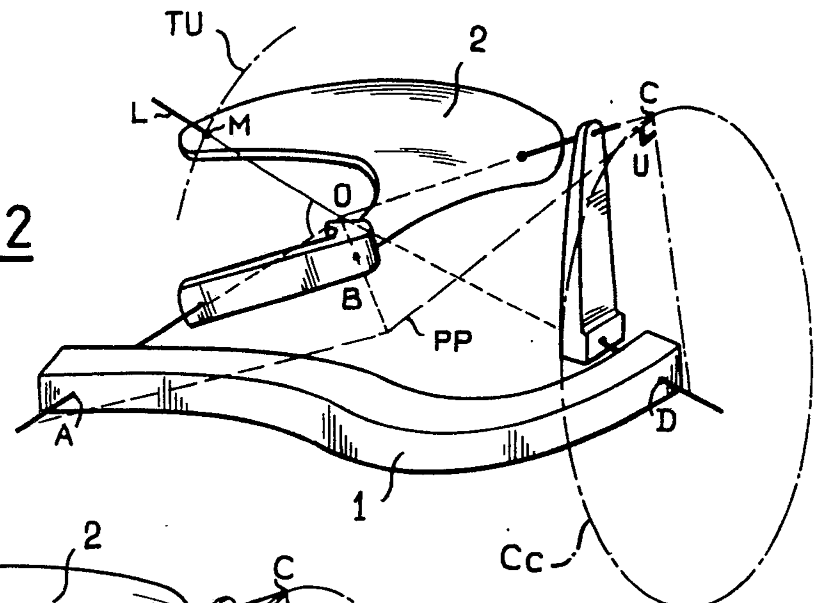


FIG_2

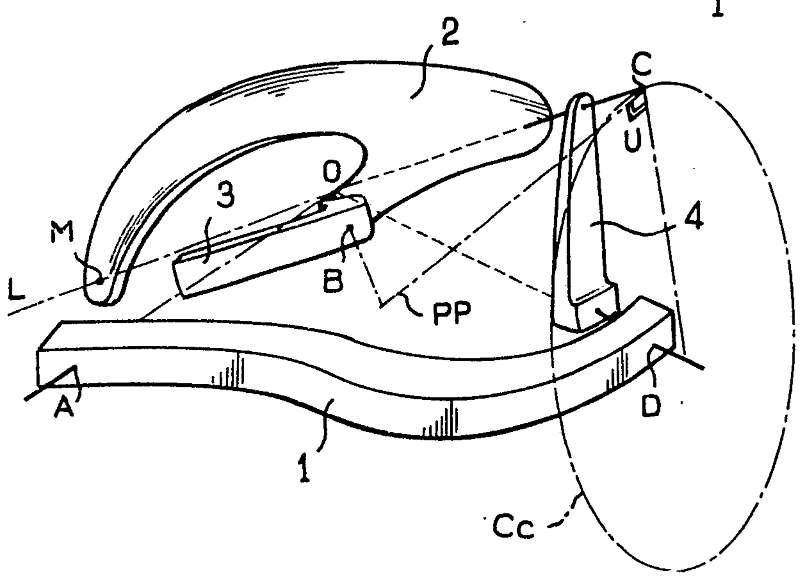


FIG_3

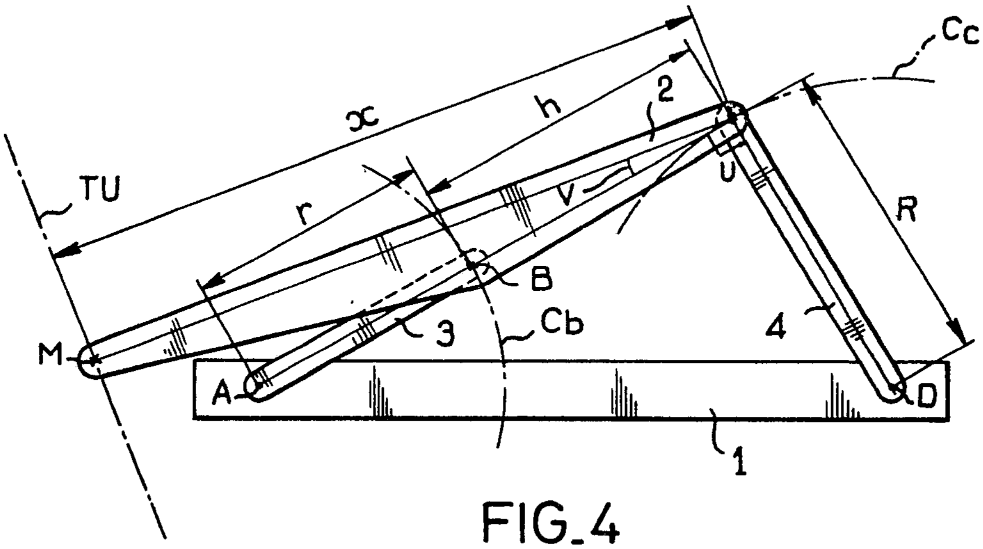


FIG_4

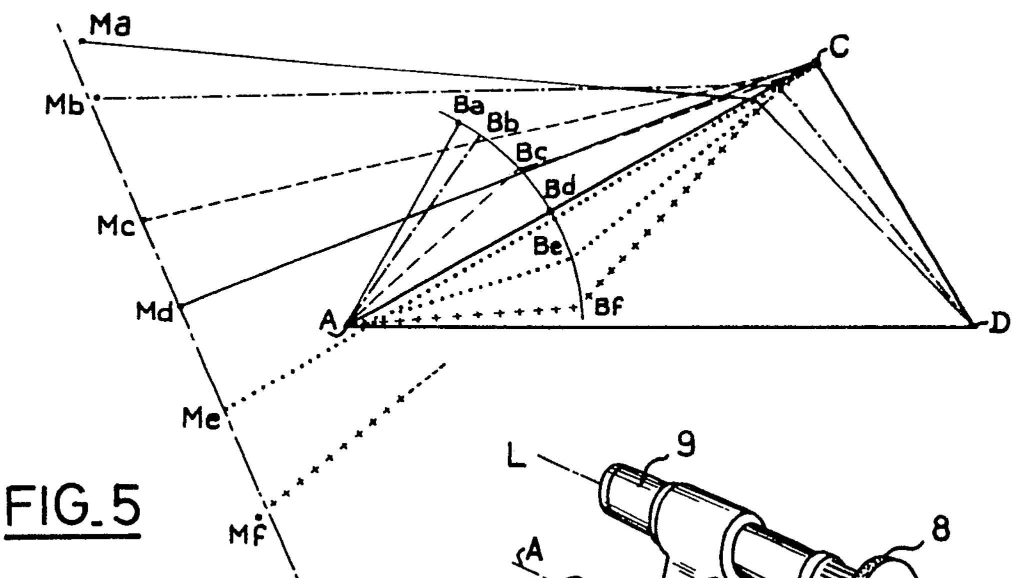


FIG_5

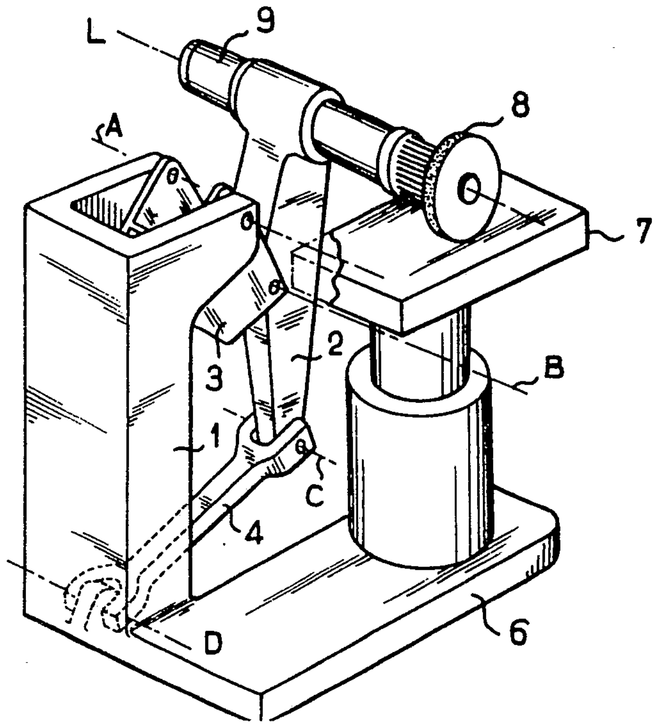


FIG_6

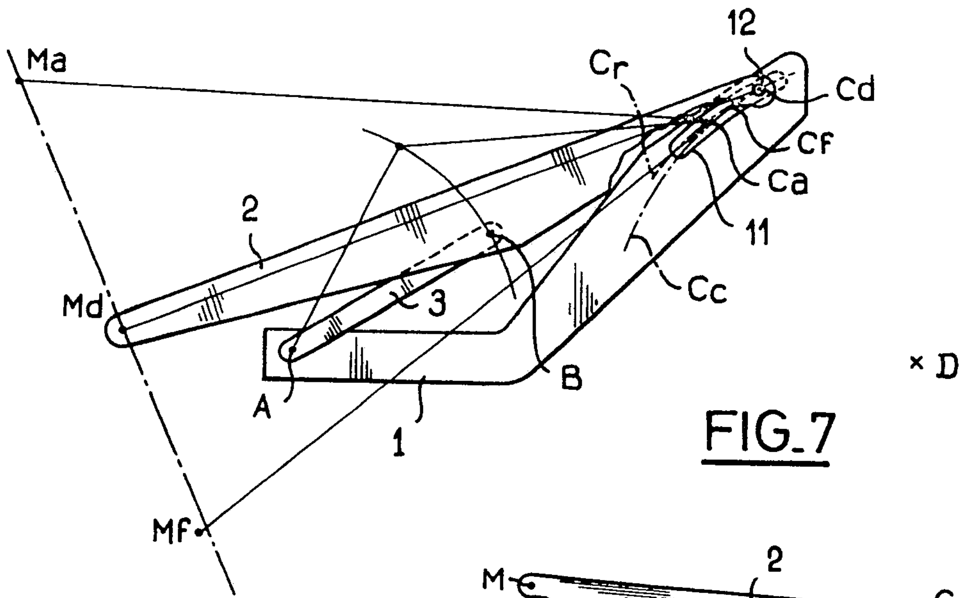


FIG_7

FIG_8

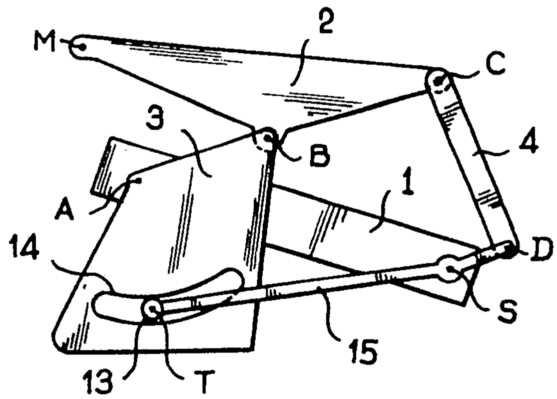


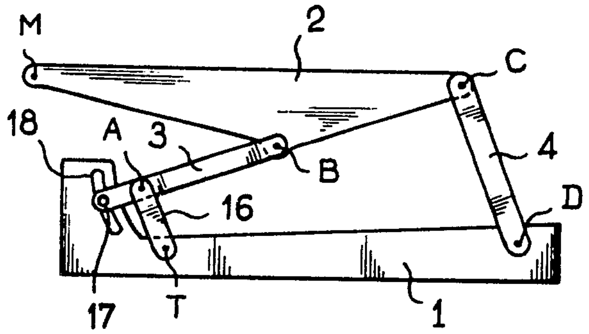


FIG_9

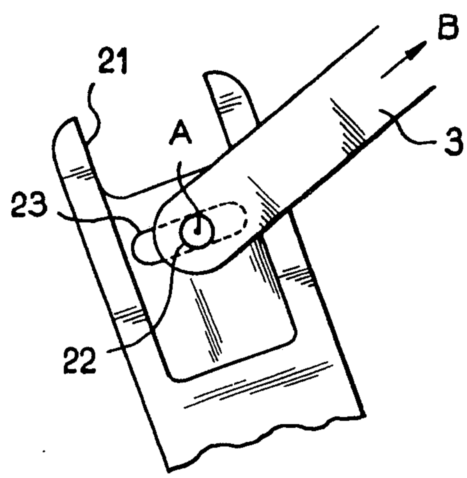


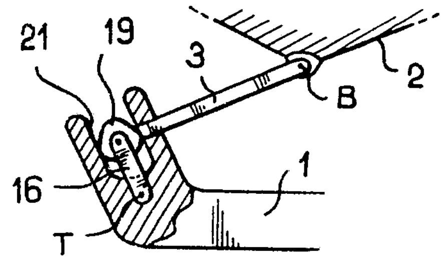


FIG_10

FIG_11

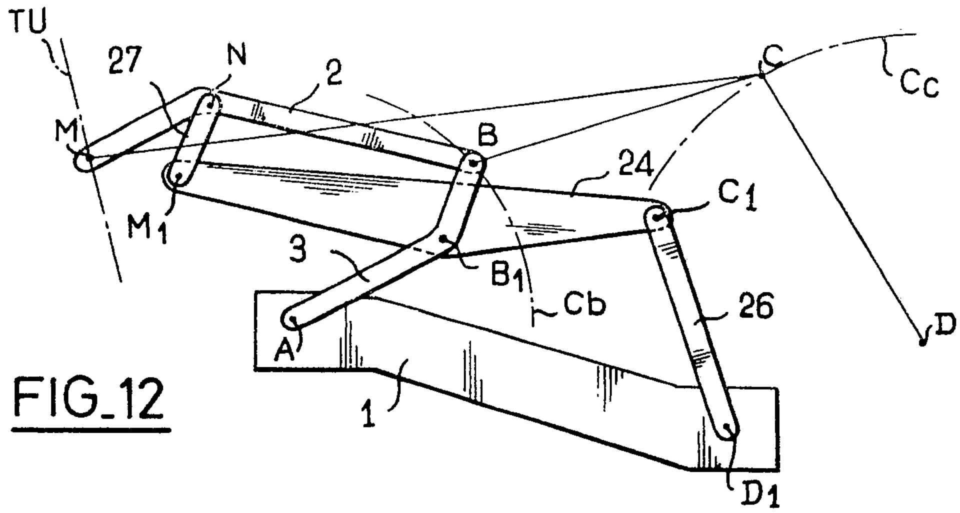


FIG_12

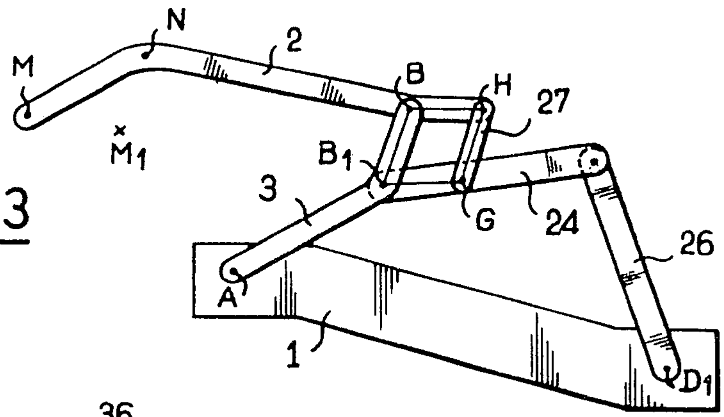


FIG_13

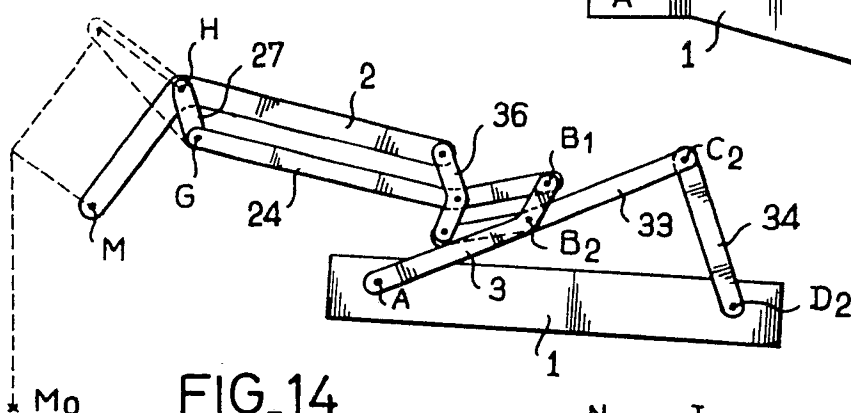


FIG_14

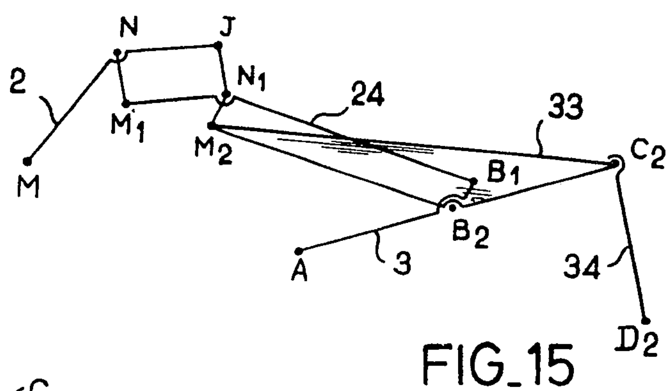


FIG_15

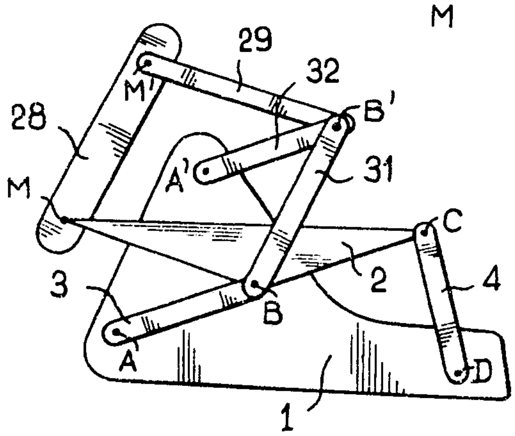


FIG_16

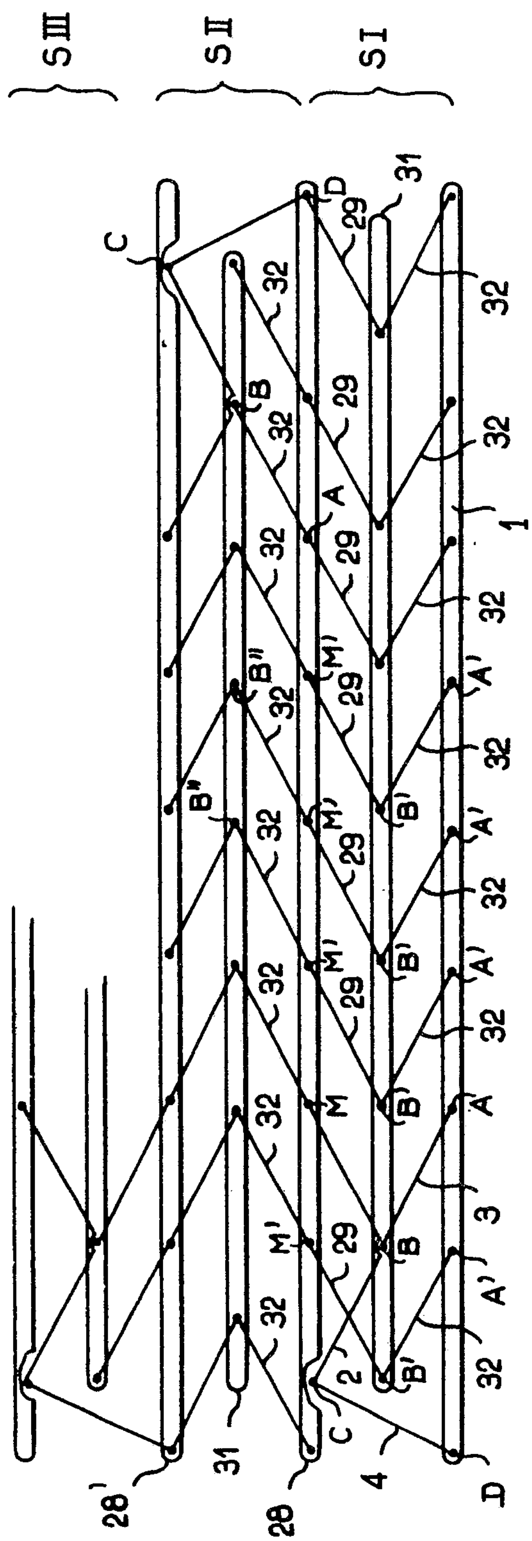
S III
S II
S I
C
D
29
31
32
B
A
B"
M'
A'
B'
M
3
2
4
1
28'
28

FIG_17

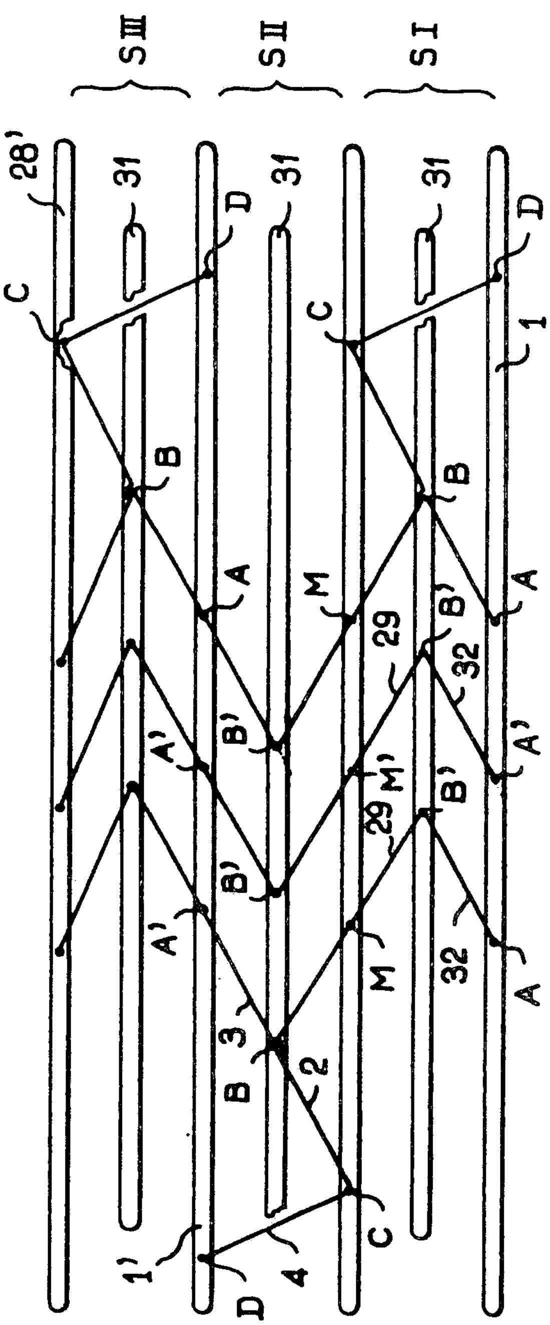
S III
S II
S I
28'
31
D
C
1
B
A
M
B'
29
32
A'
M'
3
2
4
1'

FIG_18

FIG_19

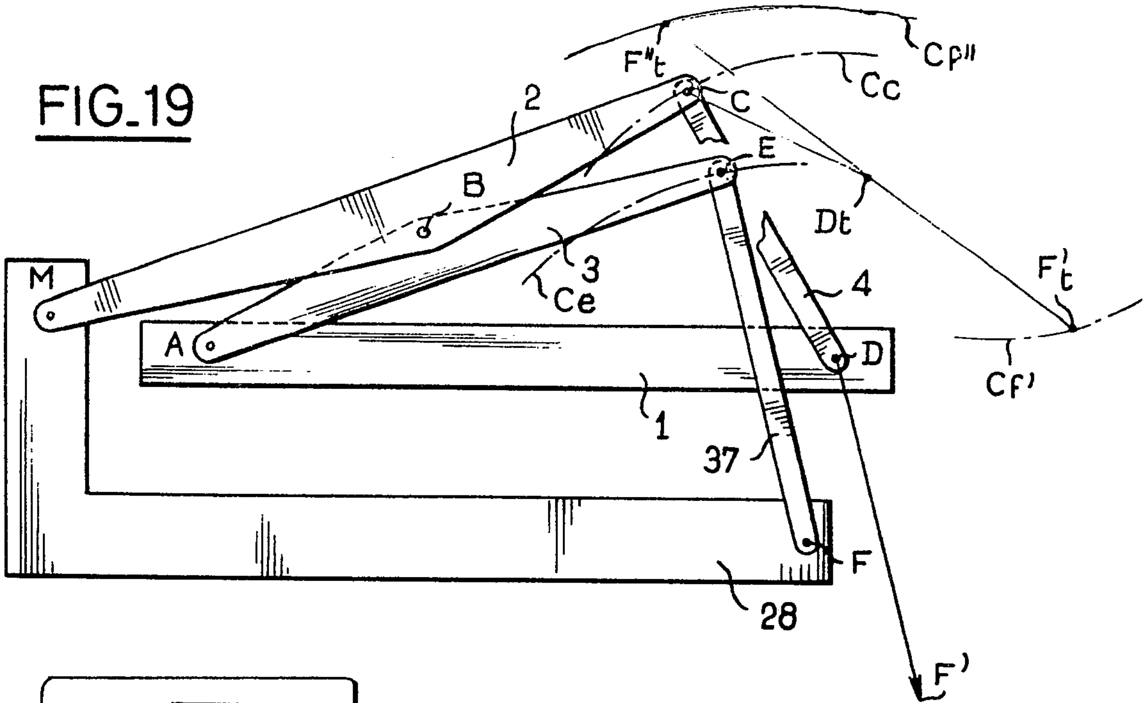


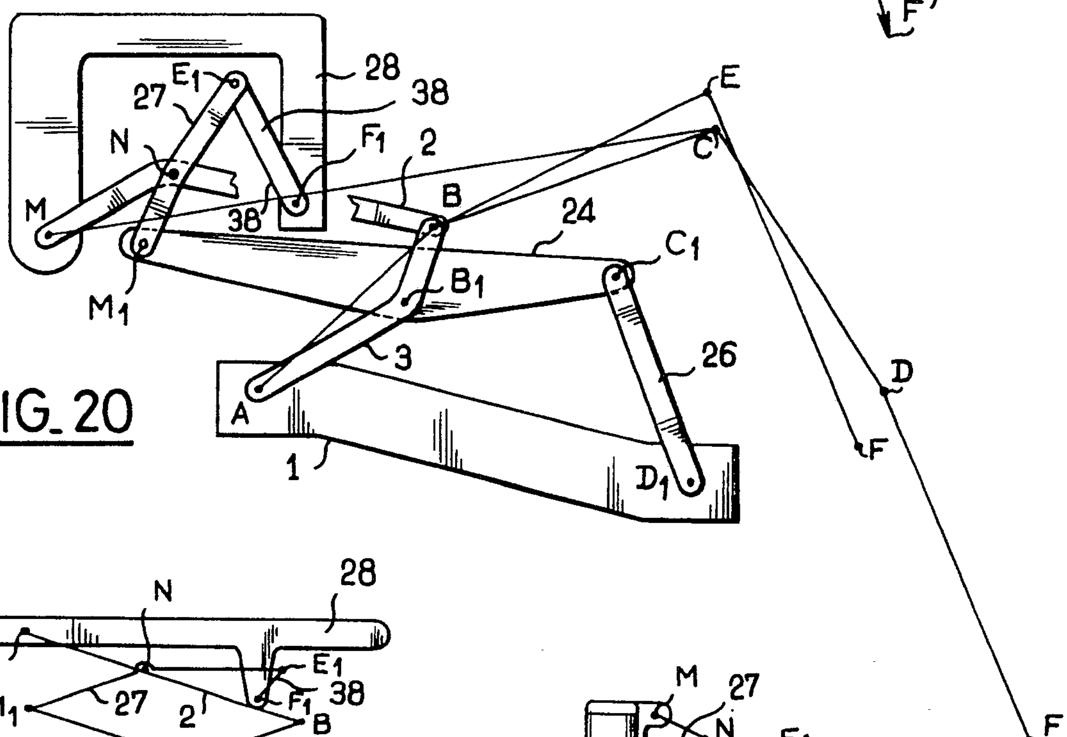


FIG_20

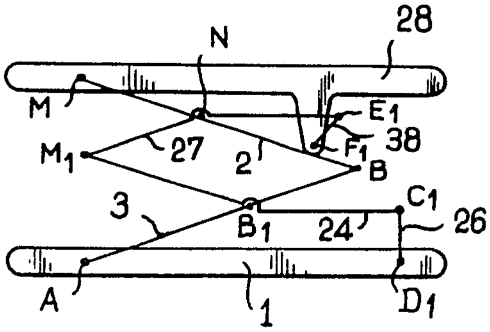


FIG_21

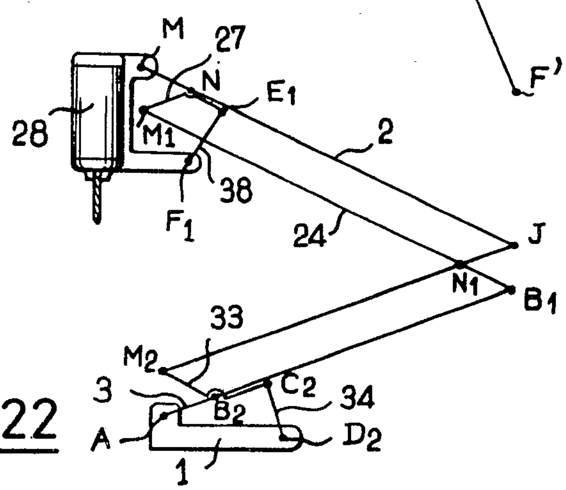


FIG_22

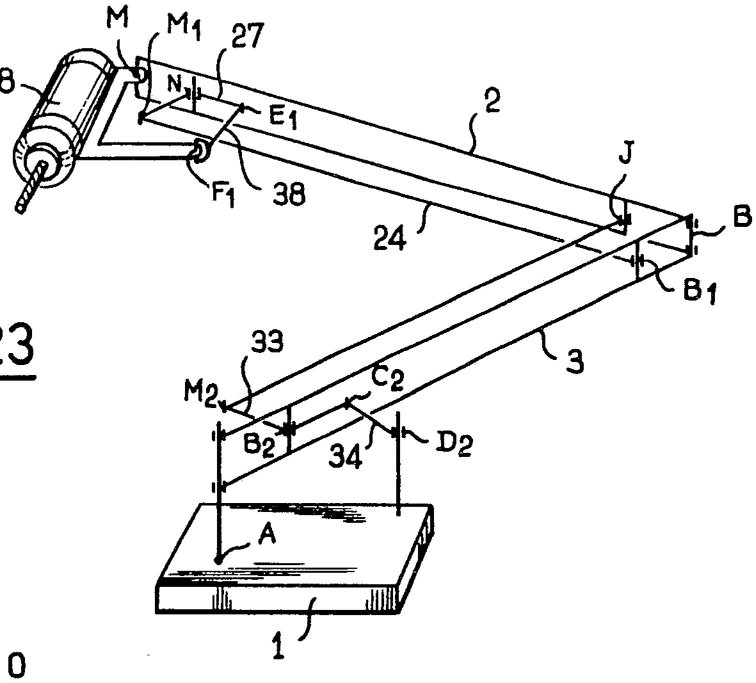


FIG_23

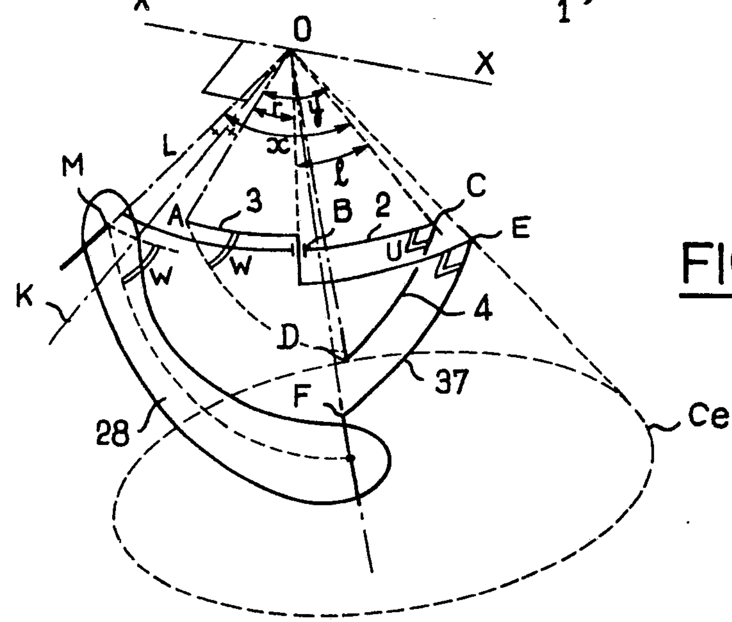


FIG_24

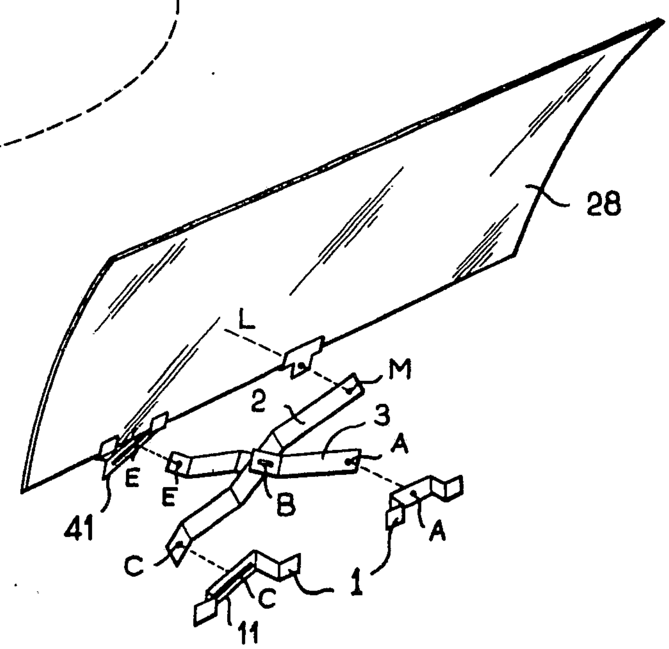


FIG_26

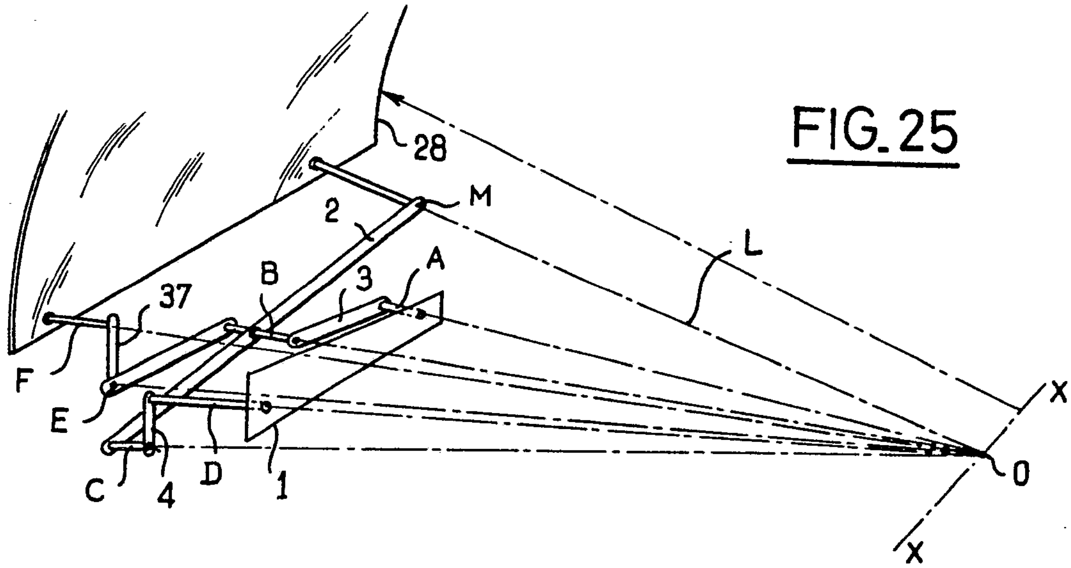


FIG.25

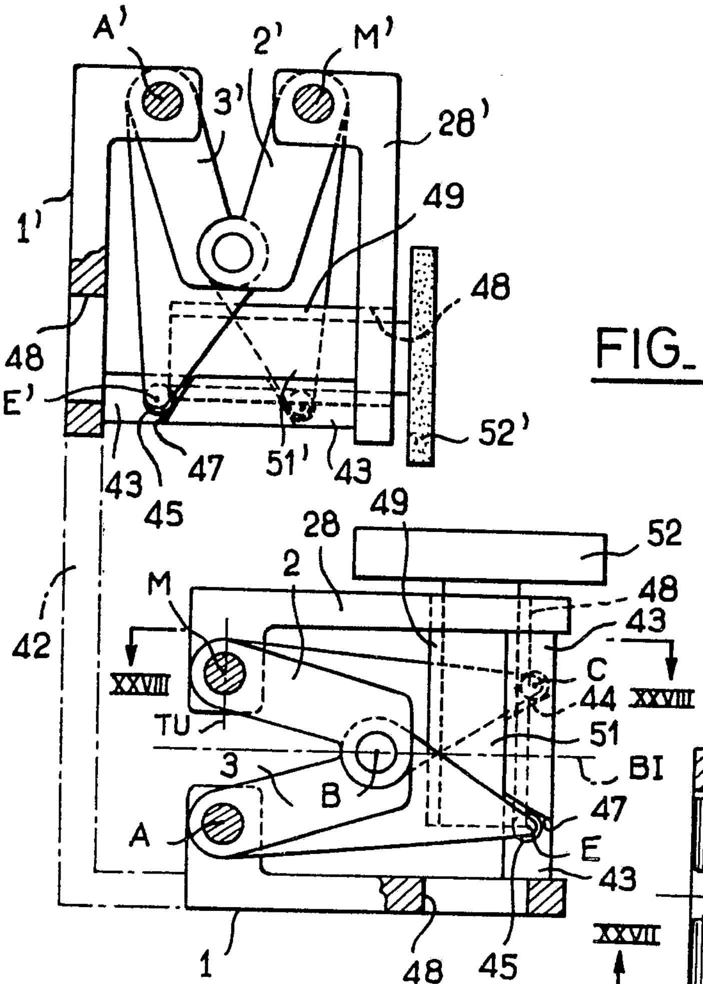


FIG_27

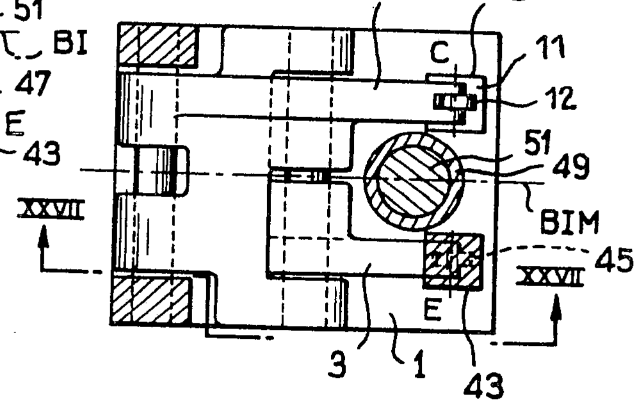


FIG_28

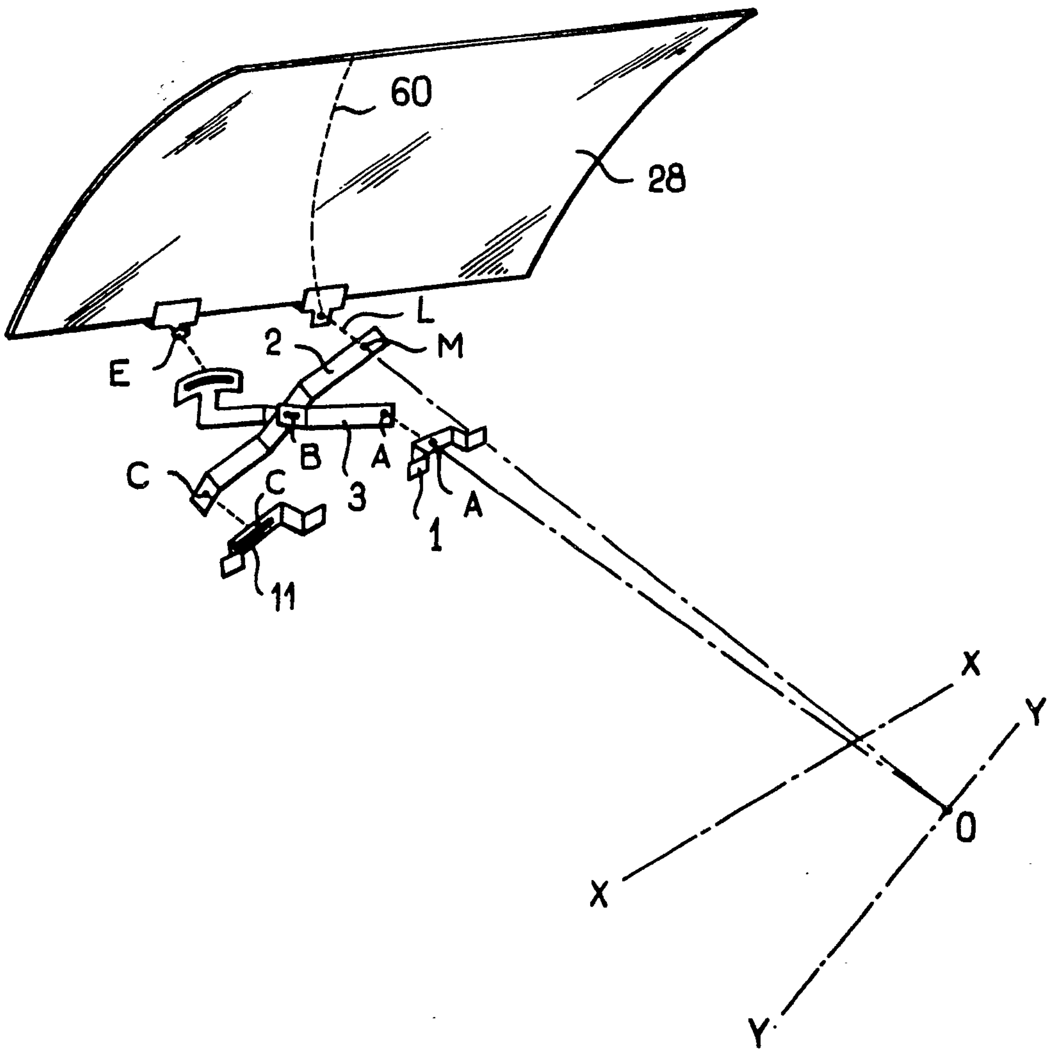


FIG_29